# EUROPÄISCHE PATENTANMELDUNG

(11) **EP 4 566 725 A2**
(43) Veröffentlichungstag der Anmeldung: **11.06.2025**
(21) Anmeldenummer: 25172297.1
(22) Anmeldetag: 09.01.2019
(51) Int. Cl.: B05C 11/10

(54) **SCHMELZMASSE UND VERFAHREN ZUM ERZEUGEN EINES FIXIERBEREICHS IN EINEM LEICHTBAUELEMENT**

(62) Teilanmeldung aus: 19700568.9
(71) Anmelder: Novoryt AG, 4462 Rickenbach (CH)
(72) Erfinder: HIRSCHI, Markus, 4462 Rickenbach (CH); MÜLLER, Heinz, 4466 Ormalingen (CH)
(74) Vertreter: Troesch Scheidegger Werner AG

(57) **Zusammenfassung**

Bereitgestellt wird eine Füllstoffmischung zum Herstellen einer Schmelzmasse. Die Füllstoffmischung umfasst einen Polymeranteil aus der Gruppe Vinylacetat-Copolymer (VAc-Copolymer), Ethen-Ethylacrylat-Copolymer (E/EA), Ethen-Vinylacetat-Copolymer (E/VA), Ethylmethacrylat (EMA), Ethylen Butyl Acrylat (EBA), Ethylen Acryl Säure (EAA), einen Wachsanteil aus der Gruppe Polyolefin-Wachs, Amid-Wachs, Montan-Wachs, Kohlenwasserstoff-Wachs, E/VA-Wachs, Metallocen-Wachs, einen Harzanteil aus Kohlenwasserstoffharz und einen Anteil an Modifizierungsmittel aus der Gruppe Farbpigmente, Fasern, Leichtfüllstoff. Der Wachsanteil setzt sich zusammen aus einer Wachsmischung, die Kohlenwasserstoff-Wachs, Polyethylenwachs mit Maleinsäureanhydrid modifiziert, Polypropylenwachs mit Maleinsäureanhydrid modifiziert und Propylen-Ethylen-Copolymerwachs umfasst. Darüber hinaus bereitgestellt wird u.a. ein Verfahren zum Erzeugen eines Fixierbereichs in einem Leichtbauelement und ein Leichtbauelement mit Fixierbereich.

## Beschreibung

Die vorliegende Erfindung betrifft insbesondere eine Füllstoffmischung zum Herstellen einer Schmelzmasse, ein Verfahren zum Erzeugen eines Fixierbereichs in einem Leichtbauelement und ein Leichtbauelement mit Fixierbereich.

Im Zuge des Lebenswandels der letzten Jahrzehnte und des damit in Verbindung stehenden geänderten Konsumverhaltens kann im Wohnbereich ein Trend beobachtet werden, welcher weg von teuren Massivholzmöbeln hin zu kostengünstigeren Leichtbaumöbeln zeigt. Diese müssen keine Generationen mehr überdauern, sondern können mit der Mode gehen und entsprechend regelmässig ersetzt werden. Um solch kostengünstige Möbel jedoch nach wie vor gewinnbringend produzieren zu können, müssen die einzelnen Bestandteile der Möbel preiswert, aber dennoch für die vorgesehene Lebensdauer stabil, hergestellt werden können. Gängige Einzelbestandteile sind beispielsweise Leichtbauelemente, wie z.B. Leichtbauplatten, welche meist einen Kern aus Holzwolle und Bindemittel oder gar einen Kern aus einer Art gebundener Pappe aufweisen. Aber auch Pressspannplatten unterschiedlicher Qualität werden im Sinne dieser Erfindung zu den Leichtbauplatten gezählt. Handelsübliche Leichtbauplatten umfassen Platten aus beispielsweise Wellkarton, Platten mit Wabenstrukturen aus Karton, Platten mit einer geschäumten PU-Mittellage und Platten mit einer Wabenverstärkung in der Mittelschicht und Deckschichten aus Vollkunststoff. Um optisch mehr einem Massivholzbauteil zu ähneln, sind Leichtbauplatten häufig auf mindestens zwei Seiten mit einem Laminat verklebt oder verpresst, sodass der Kern der Platte zwischen Laminat "gesandwicht" ist. Solche Leichtbauplatten, welche teils auch unter dem Begriff Holzfaserplatten bekannt sind, weisen einen entscheidenden Nachteil auf. Werden sie zum Möbelbau verwendet werden, so ist es kaum möglich Verankerungen, wie z.B. Dübel oder Schrauben, derart anzubringen, dass sie in der nicht massiven Struktur des Leichtbauelements gut halten. Eine bisher bekannte Lösung dieses Problem ist es, an die zur Befestigung vorgesehenen stellen extra Beschläge anzubringen, um ein sicheres Halten von Dübel, Schraube und Co. zu gewährleisten. Jedoch verursacht diese bekannte Lösung extra Kosten, einerseits in Form von Materialkosten, andererseits in Form von zusätzlichen Arbeitsschritten. Dies wirkt sich wiederum negativ auf den Preis des Endprodukts bzw. auf die damit verbundene Gewinnspanne aus.

Die Aufgabe der vorliegenden Erfindung besteht darin, eine ökonomischere Art und Weise der Verstärkung von Leichtbauelementen bereitzustellen.

Diese Aufgabe wird im Kern gelöst durch das Applizieren einer Schmelzmasse in eine Ausnehmung eines Leichtbauelements. Die Schmelzmasse füllt einerseits die Ausnehmung mindestens teilweise aus, andererseits dringt sie auch in zu der Ausnehmung benachbarte Bereiche des Leichtbauelements ein. Durch Abkühlung erhärtet die Schmelzmasse und bildet so schliesslich eine lokale Verstärkung im Bereich der Ausnehmung des Leichtbauelements. Dieser sogenannte Fixierbereich ist ausrechend stark, um Schrauben, Dübel etc. sicher zu halten.

Eine Vorrichtung zum Applizieren von Portionen einer Schmelzmasse, beispielsweise in eine Ausnehmung eines Leichtbauelements, umfasst einen Tank zum Bereitstellen von Schmelzmasse, welcher Tank über mindestens eine über ein Ventil regulierbare Auslassöffnung verfügt. Weiter umfasst die Vorrichtung einen Applikationskopf mit einer Einlassöffnung und einer Applikationsöffnung und einen Kanal, welcher in Fluidverbindung mit der Auslassöffnung des Tanks und der Einlassöffnung des Applikationskopfs steht. Ebenfalls umfasst die Vorrichtung eine Druckquelle zum Befördern von Schmelzmasse aus dem Tank durch dessen Auslassöffnung über den Kanal zur Applikationsöffnung des Applikationskopfs. Darüber hinaus umfasst die Vorrichtung einen Heizblock. Der Tank ist thermisch gekoppelt angeordnet am Heizblock und der Kanal verläuft thermisch gekoppelt durch den Heizblock.

Eine solche Vorrichtung ist besonders kompakt und daher einfach in der Handhabung. Eine solch kompakte Vorrichtung eignet sich besonders für automatisierte Arbeitsabläufe und somit auch für den Robotik oder CNC-Gebrauch. Bisherige Vorrichtungen mit einer vergleichbaren Eignung führten die Schmelzmasse kontinuierlich über einen mit einem Applikationskopf verbundenen Schlauch zu, welcher Schlauch getrennt beheizt werden musste. Durch das Obsolet-Werden des Schlauches kann die Vorrichtung deutlich energiesparender betrieben werden. Ausserdem muss bei einem Wechsel des Typs an Schmelzmasse (z.B. einer anderen Farbe) nicht erst der Schlauch gereinigt werden. Auch ist ein kontinuierlicher Betrieb nicht mehr zwingend, da die Schmelzmasse aus dem Tank über das Ventil regulierbar zugeführt werden kann, sodass eine portionsweise Applikation und somit ein Intervallbetrieb ermöglicht ist. Indem der Kanal thermisch gekoppelt mindestens teilweise durch den Heizblock verläuft, wird ein Zusetzen des Kanals mit durch Temperaturabfall erhärteter Schmelzmasse verhindert. Der Kanal ist möglichst kurz zu halten. Die thermische Kopplung zwischen Heizblock und Tank ermöglichen das Erzeugen der Schmelzmasse, indem eine sich im Tank befindliche Füllstoffmischung geschmolzen wird. Der Tank kann lediglich auf dem Heizblock aufliegen oder aber teilweise oder vollständig in den Heizblock eingelassen sein. So kann die Grösse der Fläche, über welche Wärmeübertragung stattfinden soll, modifiziert werden. Der Heizblock ist somit ein zentrales Element für das Bereitstellen und den Transport der Schmelzmasse. Entsprechend ist der Heizblock bevorzugt aus einem gut wärmeleitenden Material, wie z.B. einem Metall gefertigt, beispielsweise aus Messing, Aluminium oder rostfreiem Stahl. Der Heizblock wird bspw. über einen, zwei oder mehr Heizstäbe beheizt, welche in Ausnehmungen im Heizblock eingebracht werden können und so bei einem Defekt schnell ausgetauscht sind.

In einer Ausführungsform der Vorrichtung, welche mit jeder der bereits genannten und noch zu nennenden Ausführungsform kombiniert werden kann, sofern nicht im Widerspruch, ist der Applikationskopf thermisch gekoppelt angeordnet am Heizblock.

In dieser Ausführungsform bilden Tank, Kanal und Applikationskopf eine mittels des Heizblocks thermisch gekoppelte Einheit. Indem auch der Applikationskopf thermisch gekoppelt ist wird verhindert, dass dieser sich mit erhärtender Schmelzmasse zusetzt bzw. ein extra Heizelement für den Applikationskopf benötigt wird. Der Applikationskopf kann bspw. direkt anliegen am Heizblock oder teilweise bis vollständig in diesen eingelassen sein.

In einer Ausführungsform der Vorrichtung, welche mit jeder der bereits genannten und noch zu nennenden Ausführungsform kombiniert werden kann, sofern nicht im Widerspruch, ist der Tank ein auswechselbarer Tank ist, welcher lösbar vom Heizblock und wiederanbringbar an den Heizblock ausgebildet ist. Der Tank umfasst in dieser Ausführungsform das die Auslassöffnung regulierende Ventil.

Mit einem derartigen Tank ist es möglich, den Tank vom Heizblock zu nehmen und an einem anderen Ort mit einem anderen Typ Füllstoff zu befüllen. Ebenso ist es möglich mehrere derartige Tanks befüllt mit unterschiedlichen Typen Füllstoffmischung bereitzustellen und je nach Bedarf den Tank mit der gewünschten Füllstoffmischung am Heizblock anzubringen.

In einer Ausführungsform der Vorrichtung, welche mit jeder der bereits genannten und noch zu nennenden Ausführungsform kombiniert werden kann, sofern nicht im Widerspruch, ist das am Tank angeordnete Ventil derart konfiguriert, dass es sich automatisch schliesst, wenn der Tank sich nicht in einer Sollposition in Bezug auf den Heizblock befindet.

Mithilfe eines solchen Ventils wird verhindert, dass noch im Tank befindliche restliche Schmelzmasse bei einem Tankwechsel heraustropfen kann. Eine Sollposition kann beispielsweise durch eine auf den Tankboden oder den unteren Bereich des Tanks zugeschnittene Ausnehmung im Heizblock definiert sein, in welcher der Tankboden bzw. der untere Bereich des Tanks passgenau positioniert werden kann. Die Ausnehmung ist dann z.B. mit einem Mittel ausgestattet, welches bei korrektem Anbringen des Tanks in der Lage ist, das Ventil zu öffnen. Dies kann bspw. ein Vorsprung sein, welcher einen mittels einer Feder vorgespannten Verschlusszapfen des Ventils deplatziert und so die Auslassöffnung des Tanks öffnet (vergleichbar z.B. mit dem Wassertank einer Kaffeemaschine). Ist der Tank hingegen nicht korrekt platziert, kann der Vorsprung den Verschlusszapfen nicht gegen die Federkraft bewegen, die Auslassöffnung bleibt verschlossen.

In einer Ausführungsform der Vorrichtung, welche mit jeder der bereits genannten und noch zu nennenden Ausführungsform kombiniert werden kann, sofern nicht im Widerspruch, ist die Druckquelle eine Kolbenpumpe.

Alternativ könnte z.B. auch eine Zahnradpumpe verwendet werden. Diese weisst jedoch gegenüber der Kolbenpumpe diverse Nachteile auf, insbesondere benötigt sie einen extra Servomotor zum Antrieb, was die Vorrichtung komplizierter gestaltet als nötig.

In einer Ausführungsform der Vorrichtung, welche mit jeder der bereits genannten und noch zu nennenden Ausführungsform kombiniert werden kann, sofern nicht im Widerspruch, ist die Druckquelle derart wirkverbunden mit dem Tank, dass sie bei geöffneter Auslassöffnung Schmelzmasse in den Kanal transportiert. Weiter ist die Druckquelle derart wirkverbunden mit dem Kanal, dass sie bei geschlossener Auslassöffnung Schmelzmasse aus dem Kanal zum Applikationskopf, insbesondere zur Applikationsöffnung, befördert.

Bspw. kann die Druckquelle eine Kolbenpumpe sein, welche in der Lage ist einerseits eine Portion Schmelzmasse bei geöffnetem Ventil aus dem Tank in den Kanal anzusaugen. Andererseits kann sie bei geschlossenem Ventil des Tanks die Portion Schmelzmasse aus dem Tank durch den Applikationskopf herausdrücken und somit einspritzen in eine Ausnehmung eines sich unterhalb des Applikationskopfs befindlichen Leichtbauelements. Die Kolbenpumpe selbst sorgt somit durch einen Überdruck und einen Unterdruck für den Transport der Portion Schmelzmasse, wird aber selbst nicht zugesetzt mit Schmelzmasse und muss daher auch bei einem Wechsel an Füllstoffmischung nicht gereinigt werden.

In einer Ausführungsform der Vorrichtung, welche mit jeder der bereits genannten und noch zu nennenden Ausführungsform kombiniert werden kann, sofern nicht im Widerspruch, ist der Applikationskopf schwenkbar ausgebildet.

Für den Fall, dass ein mit einem Fixierbereich zu versehendes Leichtbauelement eine Ausnehmung, z.B. Bohrung, aufweist, deren zentrische Achse nicht parallel ist zur zentrischen Achse des Applikationskopfs, so ist ein schwenkbarer Applikationskopf von Vorteil, da dieser dann parallel zur zentrischen Achse der Ausnehmung ausgerichtet werden kann und so für eine gleichmässige, symmetrische Verteilung der Schmelzmasse in der Ausnehmung und den die Ausnehmung umgebenden Bereichen des Leichtbauelements sorgt. Der Applikationskopf ist bevorzugt um etwas über 0° bis einschliesslich 2° schwenkbar, da so typische Toleranzen, welche bei der Lochbohrung von Leichtbauelementen auftreten, ausgeglichen werden können. Eine Schwenkbarkeit ist bevorzugt in zwei Raumrichtungen gegeben und kann festgemacht werden beispielsweise an einer zentrisch durch den Kanal führenden Achse.

In einer Ausführungsform der Vorrichtung, welche mit jeder der bereits genannten und noch zu nennenden Ausführungsform kombiniert werden kann, sofern nicht im Widerspruch, umfasst die Vorrichtung eine erste Platte mit einer Durchgangsöffnung, in welcher Durchgangsöffnung der Applikationskopf mindestens teilweise angeordnet ist.

Die Durchgangsöffnung erlaubt ein Applizieren der Schmelzmasse durch die erste Platte hindurch. Die Platte selbst ermöglicht bspw. ein Fixieren der Position eines Leichtbauelements, in dessen Ausnehmung Schmelzmasse appliziert werden soll. Weiter kann die erste Platte für eine Kühlung des Leichtbauelements und somit zu einer schnelleren Erstarrung der applizierten Schmelzmasse führen. Optional kann die erste Platte auch aktiv gekühlt werden und nicht nur als passive Kühlung verwendet werden. Darüber hinaus kann die erste Platte eine Dichtwirkung haben uns so verhindern, dass Schmelzmasse seitlich zur Applikationsöffnung austritt und nicht ausschliesslich in die Ausnehmung des Leichtbauelements appliziert wird. Um Dicht-, Kühl-, und/oder Fixierwirkung zu optimieren, kann die erste Platte, insbesondere die mit dem Leichtbauelement in Kontakt zu bringende Oberfläche der ersten Platte entsprechend modifiziert werden. Es können z.B. elastomere Beschichtungen und/oder besonders gut wärmeleitende Schichten aufgebracht werden oder die ganze erste Platte aus einem solchen elastomeren und/oder gut leitenden Material hergestellt sein. Auch kann z.B. eine Beschichtung, insbesondere nur teilweise Beschichtung, aus Gummi oder einem anderen Material mit einem hohen Haftreibungskoeffizienten verwendet werden, um eine optimale Fixierung zu erreichen. Die Durchgangsöffnung geht bevorzugt im rechten Winkel durch den Mittelpunkt der oberen und unteren grossen Fläche der Platte und ist so angeordnet, dass die zentrische Achse durch die Durchgangsöffnung parallel ist zur zentrischen Achse des Applikationskopfs und/oder zur zentrischen Achse des Kanals.

In einer Ausführungsform der Vorrichtung, welche mit jeder der bereits genannten und noch zu nennenden Ausführungsform kombiniert werden kann, sofern nicht im Widerspruch, ist die erste Platte derart angeordnet, dass sie die Applikationsöffnung umgibt.

Entsprechend kommt die Applikationsöffnung innerhalb der Durchgangsöffnung der ersten Platte zu liegen. Die erste Platte ragt also über die Applikationsöffnung vor.

In einer Ausführungsform der Vorrichtung, welche mit jeder der bereits genannten und noch zu nennenden Ausführungsform kombiniert werden kann, sofern nicht im Widerspruch, ist die erste Platte derart angeordnet, dass sie bündig mit der Applikationsöffnung ist.

Entsprechend reicht die Applikationsöffnung exakt bis zu derjenigen Oberfläche der ersten Platte, welche von den restlichen Elementen der Vorrichtung weg zeigt, also welche in Gebrauch mit dem Leichtbauelement in Kontakt gebracht wird.

In einer Ausführungsform der Vorrichtung, welche mit jeder der bereits genannten und noch zu nennenden Ausführungsform kombiniert werden kann, sofern nicht im Widerspruch, ist die erste Platte derart angeordnet, dass die Applikationsöffnung über die erste Platte vorsteht.

Entsprechend verläuft nur ein Teil, insbesondere ein mittlerer Teil, des Applikationskopfs innerhalb der Durchgangsöffnung der ersten Platte. Die Applikationsöffnung zählt nicht zu diesem Teil bzw. mittleren Teil.

In einer Ausführungsform der Vorrichtung, welche mit jeder der bereits genannten und noch zu nennenden Ausführungsform kombiniert werden kann, sofern nicht im Widerspruch, ist die erste Platte auswechselbar angeordnet.

Je nach Bedarf kann eine erste Platte unterschiedliche Grössen, Dicken, Beschichtungen etc. aufweisen, sodass es erste Platten gibt, welche in Kombination mit bestimmten Leichtbauelementen besonders bevorzugt sind. Durch die auswechselbare Anordnung kann die erste Platte schnell ausgetauscht werden und der Applikationsprozess so optimiert werden.

In einer Ausführungsform der Vorrichtung, welche mit jeder der bereits genannten und noch zu nennenden Ausführungsform kombiniert werden kann, sofern nicht im Widerspruch, ist die erste Platte beweglich angeordnet.

Beweglich kann hierbei einerseits heissen, dass die Höhe der Platte relativ zur Applikationsöffnung verändert werden kann, andererseits kann die Platte auch schwenkbar angeordnet sein. So bleibt die Lage der Applikationsöffnung relativ zur Durchgangsöffnung in der Platte zwar dieselbe, aber die Lage der zentrischen Achse der Durchgangsöffnung relativ zur zentrischen Achse des Applikationskopfs und/oder zur zentrischen Achse des Kanals verändert sich. Besonders für Leichtbauelemente, deren Oberfläche nicht über eine Normale verfügt, die parallel ist zur zentrischen Achse der Durchgangsöffnung in der (unbeweglichen) Standardausrichtung der ersten Platte oder für die Verarbeitung von unterschiedlichen Leichtbauelementen, wie z.B. Leichtbauplatten unterschiedlicher Dicke, ist diese bewegliche Ausführungsform bevorzugt. Insbesondere eine Schwenkbarkeit von etwas grösser 0° (z.B. 0.1 °) bis einschliesslich 2° ist bevorzugt. Die Schwenkbarkeit kann hier bezogen sein auf die zentrische Achse des Kanals und/oder auf die zentrische Achse des Applikationskopfs.

In einer Ausführungsform der Vorrichtung, welche mit jeder der bereits genannten und noch zu nennenden Ausführungsform kombiniert werden kann, sofern nicht im Widerspruch, ist die erste Platte über Federn, insbesondere über vier Federn, angeordnet.

Die Federn dienen insbesondere einer beweglichen Anordnung der ersten Platte und erleichtern das Befestigen der diesen, bspw. am Heizblock. An diesem ist die erste Platte bevorzugt in nicht thermisch gekoppelter Art und Weise angeordnet.

In einer Ausführungsform der Vorrichtung, welche mit jeder der bereits genannten und noch zu nennenden Ausführungsform kombiniert werden kann, sofern nicht im Widerspruch, umfasst die Vorrichtung eine zweite Platte, welche in durch die Applikationsöffnung definierte Applikationsrichtung unterhalb der ersten Platte, im Wesentlichen parallel zur ersten Platte und beabstandet zur Applikationsöffnung angeordnet ist.

Mithilfe dieser Ausführungsform kann ein Leichtbauelement zwischen der ersten und der zweiten Platte "gesandwicht" und dadurch fixiert werden. Weiter kann die zweite Platte für eine zusätzliche passive oder aktive Kühlung (sprich zweite Platte wird gekühlt) sorgen. Für den Fall, dass die Ausnehmung im Leichtbauelement eine Durchgangsbohrung oder dergleichen ist, kann die zweite Platte ebenfalls der Abdichtung dienen und verhindern, dass Schmelzmasse in Applikationsrichtung aus der Ausnehmung des Leichtbauelements tropft. Die zweite Platte kann ebenfalls direkt an mindestens einem der übrigen Bestandteile (z.B. Heizblock) der Vorrichtung angeordnet sein, oder aber baulich von diesen getrennt sein.

In einer Ausführungsform der Vorrichtung, welche mit jeder der bereits genannten und noch zu nennenden Ausführungsform kombiniert werden kann, sofern nicht im Widerspruch, weist die zweite Platte eine in Richtung der Applikationsöffnung weisende Oberfläche auf, welche Silikon umfasst und/oder mindestens teilweise elastisch ausgebildet ist.

Durch eine derart ausgebildete Oberfläche kann eine optimierte Dichtwirkung aber auch eine optimierte Fixierwirkung erreicht werden, wie bereits in Zusammenhang mit der ersten Platte erläutert. Sämtliche für die erste Platte beschriebenen Ausgestaltungsvarianten können analog auf die zweite Platte übertragen werden und andersherum.

In einer Ausführungsform der Vorrichtung, welche mit jeder der bereits genannten und noch zu nennenden Ausführungsform kombiniert werden kann, sofern nicht im Widerspruch, ist die Distanz zwischen der ersten Platte und der zweiten Platte veränderbar, insbesondere indem die zweite Platte beweglich angeordnet ist.

Mithilfe einer solchen Ausführungsform kann die Vorrichtung eingesetzt werden für Leichtbauelemente unterschiedlicher Dimensionierung. Dabei kann, wie bereits beschrieben, die erste Platte beweglich angeordnet sein und/oder es ist die zweite Platte, welche beweglich ausgebildet ist, beispielsweise indem sie auf einem höhenverstellbaren und/oder schwenkbaren Sockel angeordnet ist.

In einer Ausführungsform der Vorrichtung, welche mit jeder der bereits genannten und noch zu nennenden Ausführungsform kombiniert werden kann, sofern nicht im Widerspruch, weist die erste Platte eine Oberfläche auf, zeigend in die durch die Applikationsöffnung definierte Applikationsrichtung, welche Oberfläche glatt ist oder ein Profil aufweist.

Derartige Oberflächengestaltungen erlauben eine Anpassung der ersten Platte, aber auch der zweiten Platte, an die Oberflächengestaltung der Leichtbauelemente, sodass Wärmeabtransport, Fixierung und/oder Dichtwirkung optimiert werden können.

In einer Ausführungsform der Vorrichtung, welche mit jeder der bereits genannten und noch zu nennenden Ausführungsform kombiniert werden kann, sofern nicht im Widerspruch, umfasst die Vorrichtung ein Mischventil, welches entlang des Kanals angeordnet ist.

So können Zusatzstoffe, wie z.B. Katalysatoren zur beschleunigten Aushärtung der Schmelzmasse, welche nicht bereits Teil der Füllstoffmischung sein sollten, vor der tatsächlichen Applikation der Schmelzmasse zugefügt werden. Ist ein solches Mischventil vorhanden, so kann es für eine bessere Durchmischung sinnvoll sein, den Kanal z.B. mit einem Rührer oder Mischer zu versehen oder den Kanal mindestens teilweise spiralförmig oder als Mischrohr auszubilden.

In einer Ausführungsform der Vorrichtung, welche mit jeder der bereits genannten und noch zu nennenden Ausführungsform kombiniert werden kann, sofern nicht im Widerspruch, umfasst die Vorrichtung eine Hebe- und Senkvorrichtung, welche dazu ausgebildet ist, den Tank, den Applikationskopf, den Kanal, die Druckquelle und den Heizblock zu heben und zu senken.

Weiter kann die Hebe- und Senkvorrichtung je nach Ausführung auch zusätzlich die erste Platte und/oder die zweite Platte heben und senken. Insbesondere bei einer fest installierten Vorrichtung bietet die Hebe- und Senkvorrichtung die Möglichkeit eine maximale Bandbreite an unterschiedlichen Leichtbauelementen zu verarbeiten. Handelte es sich um eine nicht fest installierte Vorrichtung, so kann das Heben und Senken auch von einem Arbeiter händisch ausgeführt werden.

Es wird darauf hingewiesen, dass die Vorrichtung insbesondere geeignet ist zum Applizieren einer Portion Schmelzmasse zum Erzeugen eines Fixierbereichs in einem Leichtbauelement, jedoch nicht auf eine derartige Anwendung limitiert ist.

Im Folgenden ist beispielhaft eine Auswahl an weiter denkbaren Ausführungsvarianten der Vorrichtung näher beschrieben.
1. Ausführungsvariante Vorrichtung (1) zum Applizieren von Portionen einer Schmelzmasse, umfassend:
   - einen Tank (10) zum Bereitstellen von Schmelzmasse, welcher über mindestens eine über ein Ventil (16) regulierbare Auslassöffnung (15) verfügt;
   - einen Applikationskopf (50) mit einer Einlassöffnung (51) und einer Applikationsöffnung (52);
   - einen Kanal (20), in Fluidverbindung mit der Auslassöffnung (15) des Tanks (10) und der Einlassöffnung (51) des Applikationskopfs (50) stehend;
   - eine Druckquelle (40) zum Befördern von Schmelzmasse aus dem Tank (10) durch dessen Auslassöffnung (15) über den Kanal (20) zur Applikationsöffnung (52) des Applikationskopfs (50); und
   - einen Heizblock (30);
   wobei der Tank (10) thermisch gekoppelt angeordnet ist am Heizblock (30) und der Kanal (20) thermisch gekoppelt durch den Heizblock (30) verläuft.
2. Ausführungsvariante Vorrichtung (1) nach Ausführungsvariante 1, wobei der Applikationskopf (50) thermisch gekoppelt angeordnet ist am Heizblock (30).
3. Ausführungsvariante Vorrichtung (1) nach Ausführungsvariante 1 oder 2, wobei der Tank (10) ein auswechselbarer Tank ist, welcher lösbar vom Heizblock (30) und wiederanbringbar an den Heizblock (30) ausgebildet ist, und wobei der Tank (30) das die Auslassöffnung (15) regulierende Ventil (16) umfasst.
4. Ausführungsvariante Vorrichtung (1) nach Ausführungsvariante 3, wobei das Ventil (16) derart konfiguriert ist, dass es sich automatisch schliesst, wenn der Tank (10) sich nicht in einer Sollposition in Bezug auf den Heizblock (30) befindet.
5. Ausführungsvariante Vorrichtung (1) nach einer der Ausführungsvarianten 1 bis 4, wobei die Druckquelle (40) eine Kolbenpumpe ist.
6. Ausführungsvariante Vorrichtung (1) nach einer der Ausführungsvarianten 1 bis 5, wobei:
   - die Druckquelle (40) derart wirkverbunden ist mit dem Tank (10), dass sie bei geöffneter Auslassöffnung (15) Schmelzmasse in den Kanal (20) transportiert, und derart wirkverbunden ist mit dem Kanal (20), dass sie bei geschlossener Auslassöffnung (15) Schmelzmasse aus dem Kanal (20) zum Applikationskopf (50), insbesondere zur Applikationsöffnung (52), befördert.
7. Ausführungsvariante Vorrichtung (1) nach einer der Ausführungsvarianten 1 bis 6, wobei der Applikationskopf (50) schwenkbar ist.
8. Ausführungsvariante Vorrichtung (1) nach Ausführungsvariante 7, wobei der Applikationskopf (50) um 0° bis einschliesslich 2° schwenkbar ist.
9. Ausführungsvariante Vorrichtung (1) nach einer der Ausführungsvarianten 1 bis 8, umfassend eine erste Platte (60) mit einer Durchgangsöffnung, in welcher Durchgangsöffnung der Applikationskopf (50) mindestens teilweise angeordnet ist.
10. Ausführungsvariante Vorrichtung (1) nach Ausführungsvariante 9, wobei die erste Platte (60) derart angeordnet ist, dass sie die Applikationsöffnung (52) umgibt.
11. Ausführungsvariante Vorrichtung (1) nach Ausführungsvariante 9, wobei die erste Platte (60) derart angeordnet ist, dass sie bündig mit der Applikationsöffnung (52) ist.
12. Ausführungsvariante Vorrichtung (1) nach Ausführungsvariante 9, wobei die erste Platte (60) derart angeordnet ist, dass die Applikationsöffnung (52) über die erste Platte (60) vorsteht.
13. Ausführungsvariante Vorrichtung (1) nach einer der Ausführungsvarianten 9 bis 12, wobei die erste Platte (60) beweglich und/oder auswechselbar angeordnet ist.
14. Ausführungsvariante Vorrichtung (1) nach Ausführungsvariante 13, wobei die erste Platte (60) schwenkbar ist, insbesondere um 0° bis einschliesslich 2°.
15. Ausführungsvariante Vorrichtung (1) nach Ausführungsvariante 13 oder 14, wobei die erste Platte (60) über Federn, insbesondere über vier Federn, angeordnet ist.
16. Ausführungsvariante Vorrichtung (1) nach einer der Ausführungsvarianten 9 bis 15, wobei die erste Platte (60) am Heizblock (30) angeordnet ist, insbesondere nicht thermisch gekoppelt angeordnet ist.
17. Ausführungsvariante Vorrichtung (1) nach einer der Ausführungsvarianten 9 bis 16, umfassend eine zweite Platte (65), welche in durch die Applikationsöffnung (52) definierte Applikationsrichtung unterhalb der ersten Platte (60), im Wesentlichen parallel zur ersten Platte (60) und beabstandet zur
   Applikationsöffnung (52) angeordnet ist.
18. Ausführungsvariante Vorrichtung (1) nach Ausführungsvariante 17, wobei die zweite Platte (65) eine in Richtung der Applikationsöffnung (52) weisende Oberfläche aufweist, welche Silikon umfasst und/oder mindestens teilweise elastisch ausgebildet ist.
19. Ausführungsvariante Vorrichtung (1) nach Ausführungsvariante 17 oder 18, wobei die zweite Platte (65) gekühlt ist.
20. Ausführungsvariante Vorrichtung (1) nach einer der Ausführungsvarianten 17 bis 19, wobei die Distanz zwischen der ersten Platte (60) und der zweiten Platte (65) veränderbar ist, insbesondere indem die zweite Platte (65) beweglich angeordnet ist.
21. Ausführungsvariante Vorrichtung (1) nach einer der Ausführungsvarianten 9 bis 20, wobei die erste Platte (60) eine Oberfläche aufweist, zeigend in die durch die Applikationsöffnung (52) definierte Applikationsrichtung, welche Oberfläche glatt ist oder ein Profil aufweist.
22. Ausführungsvariante Vorrichtung (1) nach einer der Ausführungsvarianten 1 bis 21, umfassend ein Mischventil, welches entlang des Kanals (20) angeordnet ist.
23. Ausführungsvariante Vorrichtung (1) nach einer der Ausführungsvarianten 1 bis 22, umfassend eine Hebe- und Senkvorrichtung (70), welche dazu ausgebildet ist, den Tank (10), den Applikationskopf (50), den Kanal (20), die Druckquelle (40) und den Heizblock (30) zu heben und zu senken.

Die Vorrichtung zum Applizieren von Portionen einer Schmelzmasse ist eine erfindungsgemässe Vorrichtung, sofern sie zum Schmelzen einer nachfolgend im vorliegenden Dokument beschriebenen erfindungsgemässen Füllstoffmischung verwendet wird.

Weiter beschrieben ist ein Applikationsaufsatz für eine Vorrichtung, insbesondere eine hiervor beschriebene Vorrichtung. In einer bevorzugten Ausführungsform der Vorrichtung umfasst deren Applikationskopf einen Applikationsaufsatz wie nachstehend beschrieben.

Der Applikationsaufsatz umfasst mindestens eine Applikationsöffnung, welche eine Applikationsrichtung definiert. Diese Applikationsöffnung ist bevorzugt identisch zur Applikationsöffnung des Applikationskopfs. Weiter umfasst der Applikationsaufsatz einen Vorsprung, welcher in Applikationsrichtung über die mindestens eine Applikationsöffnung vorsteht und zu dieser benachbart ist.

Der Vorsprung weist eine Dimension auf kleiner als die Ausnehmung des Leichtbauelements, sodass der Vorsprung mindestens teilweise oder vollständig in der Ausnehmung positioniert werden kann. Dazu werden das Leichtbauelement und der Applikationskopf den Applikationsaufsatz umfassend vor der Injektion der Schmelzmasse entsprechend zueinander ausgerichtet. Wird nun die Schmelzmasse appliziert und härtet aus, so bleibt eine Schmelzmasse-Vakanz in der Ausnehmung zurück. Diese kann dann verwendet werden um später Dübel, Schrauben oder sonstige Befestigungsmittel anzubringen und bspw. mehrere Leichtbauelemente miteinander zu verbinden, um so **z.B.** ein Möbel zu schaffen.

Der Applikationsaufsatz kann ausgebildet sein als separates Teil, welches mit dem restlichen Applikationskopf verbunden werden kann (Zwei- oder gar mehrstückige Ausführung). Weiter kann der Applikationsaufsatz auswechselbar konzipiert sein kann, sodass je nach Anwendung der passende Aufsatz (z.B. unterschiedliche Ausbildung des Vorsprungs im Hinblick auf Länge, Durchmesser, Material, Form etc.). Weiter kann der Aufsatz aber auch fester Bestandteil des Applikationskopfs sein (einstückige Ausbildung). Der Vorsprung kann aus demselben Material sein, wie der restliche Aufsatz, er kann aber auch aus einem anderen Material sein, bspw. aus einem Material, an dem die Schmelzmasse schlecht haftet, welches aber natürlich nichtsdestotrotz temperaturbeständig sein muss (bspw. Teflon). Der Vorsprung kann auswechselbar ausgestaltet sein, sodass nicht der Applikationsaufsatz sondern nur der Vorsprung anwendungsspezifisch ausgetauscht werden muss.

In einer Ausführungsform des Applikationsaufsatzes, welche mit jeder der bereits genannten und noch zu nennenden Ausführungsform kombiniert werden kann, sofern nicht im Widerspruch, umfasst der Applikationsaufsatz mindestens zwei, insbesondere drei, vier oder fünf, Applikationsöffnungen, wobei die Applikationsöffnungen bevorzugt symmetrisch um den Vorsprung angeordnet sind.

Ein derartiger Applikationskopf sorgt für eine besonders gleichmässige Einbringung der Schmelzmasse in die Ausnehmung des Leichtbauelements, sodass der durch die erhärtetet Schmelzmasse gebildete Fixierbereich besonders tragfähig und stabil ist.

In einer Ausführungsform des Applikationsaufsatzes, welche mit jeder der bereits genannten und noch zu nennenden Ausführungsform kombiniert werden kann, sofern nicht im Widerspruch, verjüngt der Vorsprung sich in Applikationsrichtung betrachtet.

Durch diese Formgebung kann der Vorsprung, beispielsweise als Zapfen ausgebildet, nach erfolgter Applikation der Schmelzmasse besonders gut wieder aus der Ausnehmung entfernt werden.

In einer Ausführungsform des Applikationsaufsatzes, welche mit jeder der bereits genannten und noch zu nennenden Ausführungsform kombiniert werden kann, sofern nicht im Widerspruch, weist der Vorsprung einen Durchmesser von einschliesslich 0.1 cm bis einschliesslich 1.0 cm, bevorzugt von einschliesslich 0.45 cm bis einschliesslich 0.55 cm auf.

Eine derartige Dimensionierung lässt zu, dass handelsübliche Schrauben und Dübel ohne weitere Bearbeitung des Leichtbauelements direkt an diesem angebracht werden können nachdem der Fixierbereich geschaffen wurde.

Im Folgenden ist beispielhaft eine Auswahl an weiter denkbaren Ausführungsvarianten des Applikationsaufsatzes näher beschrieben.

### 24. Ausführungsvariante

Applikationsaufsatz (53) für einen Applikationskopf (50) einer Vorrichtung (1) nach einer der Ausführungsvarianten 1 bis 23, umfassend:
- mindestens eine Applikationsöffnung (52), welche eine Applikationsrichtung definiert; und
- einen Vorsprung (54), welcher in Applikationsrichtung über die mindestens eine Applikationsöffnung (52) vorsteht und zu dieser benachbart ist.

### 25. Ausführungsvariante

Applikationsaufsatz (53) nach Ausführungsvariante 24, umfassend mindestens zwei, insbesondere drei, vier oder fünf, Applikationsöffnungen (52), wobei die Applikationsöffnungen (52) bevorzugt symmetrisch um den Vorsprung (53) angeordnet sind.

### 26. Ausführungsvariante

Applikationsaufsatz (53) nach Ausführungsvariante 24 oder 25, wobei der Vorsprung (54) sich in Applikationsrichtung betrachtet verjüngt und insbesondere einen Durchmesser von einschliesslich 0.1 cm bis einschliesslich 1.0 cm, bevorzugt von einschliesslich 0.45 cm bis einschliesslich 0.55 cm aufweist.

Die Applikationsaufsatz ist ein erfindungsgemässer Applikationsaufsatz, sofern er zum Applizieren einer Schmelzmasse aus der nachfolgend im vorliegenden Dokument beschriebenen erfindungsgemässen Füllstoffmischung verwendet wird.

Weiter beschrieben ist ein Tank für eine Vorrichtung, insbesondere eine hiervor beschrieben Vorrichtung. In einer bevorzugten Ausführungsform der Vorrichtung umfasst diese einen Tank wie nachstehend beschrieben.

Der Tank weist eine Tankwandung auf, welche in mindestens einen ersten Bereich einer ersten Wärmeleitfähigkeit und einen zweiten Bereich einer zweiten Wärmeleitfähigkeit unterteilt ist. Dabei ist die erste Wärmeleitfähigkeit höher als die zweite Wärmeleitfähigkeit. Der erste Bereich umfasst mindestens eine nach Innen ragende Rippe, welche mit dem ersten Bereich thermisch gekoppelt ist. Weiter verjüngt sich der erste Bereich mindestens teilweise hin zu einer Auslassöffnung.

Ein derart ausgebildeter Tank ist besonders geeignet um ein portionsweises Schmelzen der sich im Tank befindlichen Füllstoffmischung zu erzielen, um so Portionen einer Schmelzmasse bereitzustellen. Der Tank wird bevorzugt derart in der Vorrichtung installiert, dass der erste Bereich thermisch gekoppelt ist mit dem Heizblock. So wird der erste Bereich besonders stark erwärmt, wohingegen der zweite Bereich lediglich über den ersten Bereich mit Wärme versorgt wird und aufgrund der schlechteren Wärmeleitfähigkeit weniger gut erwärmt. Die sich im zweiten Bereich befindliche Füllstoffmischung wird so noch nicht zum Schmelzen gebracht. Der erste Bereich weist z.B. eine gute Wärmeleitfähigkeit von bspw. grösser oder gleich 50 W/(m*K), insbesondere grösser oder gleich 100 W/(m*K), bevorzugt grösser oder gleich 200 W/(m*K). Aluminium z.B. besitzt eine Wärmeleitfähigkeit von ca. 236 W/(m*K) und ist entsprechend gut geeignet. Der zweite Bereich weist z.B. eine weniger gute Wärmeleitfähigkeit von bspw. kleiner 50 W/(m*K), insbesondere kleiner oder gleich 20 W/(m*K), bevorzugt kleiner oder gleich 10 W/(m*K). z.B. PEEK oder PTFE besitzen eine Wärmeleitfähigkeit von weniger als 0.25 W/(m*K) und sind entsprechend gut geeignet. Die mindestens eine nach Innen ragende Rippe sorgt für eine grössere Oberfläche und somit für ein schnelleres Schmelzen der Füllstoffmischung. Sind mehrere Rippen vorhanden, so sind diese bevorzugt symmetrisch in Bezug auf die Auslassöffnung angeordnet, sodass diese gleichmässig mit Schmelzmasse versorgt wird. Beispielsweise können die Rippen in zwei Reihen angeordnet sein, wobei sich die Reihen je auf unterschiedlichen Seiten in Bezug auf die Auslassöffnung befinden. Eine Reihe weist insbesondere zwischen vier und zehn Rippen auf. Die Rippen können einstückig mit dem ersten Bereich ausgebildet sein und entsprechend aus demselben Material sein. Die Rippen können aber auch separat ausgebildet sein und dann mit dem ersten Bereich z.B. verschraubt oder anderweitig an dessen Inneren befestigt worden sein. Auch hier können die Rippen aus demselben Material wie der erste Bereich sein, sie können aber auch aus einem anderen Material oder einer Materialmischung sein, insbesondere aus einem bzw. einer, die eine zum ersten Bereich unterschiedliche Wärmeleitung (grösser oder kleiner) ausweist. So ist eine Modifizierung des Schmelzprozesses möglich. Auch können die Rippen austauschbar sein, um den Tank anzupassen an spezifische Schmelzanforderungen (mehr Rippen, weniger Rippen, andere Verteilung der Rippen, Rippen aus anderem Material etc.). Die Verjüngung sorgt dafür, dass Schmelzmasse sich aufgrund der Schwerkraft bei der Auslassöffnung sammelt und von dort, bei geöffnetem Ventil, in den Kanal eintreten kann.

In einer Ausführungsform des Tanks, welche mit jeder der bereits genannten und noch zu nennenden Ausführungsform kombiniert werden kann, sofern nicht im Widerspruch bildet der erste Bereich des Tanks einen Konus.

Hierdurch werden das Sammeln und darauffolgende Weitertransportieren der Schmelzmasse weiter optimiert.

In einer Ausführungsform des Tanks, welche mit jeder der bereits genannten und noch zu nennenden Ausführungsform kombiniert werden kann, sofern nicht im Widerspruch, ist der zweite Bereich ein Isolationsbereich ist, welcher an den ersten Bereich angrenzt und bevorzugt durchgehend ausgebildet ist, sprich ein durchgehender Isolationsbereich.

Indem der zweite Bereich eine solch schlechte Wärmeleitfähigkeit aufweist, dass er bereits ein Isolationsbereich ist, erwärmt sich der zweite Bereich quasi gar nicht, sodass die sich in diesem Bereich befindliche Füllstoffmischung nicht zu schmelzen beginnt. Eine solch schlechte Wärmeleitfähigkeit ist bspw. kleiner oder gleich 5 W/(m*K), insbesondere kleiner oder gleich 2 W/(m*K), bevorzugt kleiner oder gleich 1.0 W/(m*K) oder gar kleiner oder gleich 0.5 W/(m*K). Beispielsweise eignen sich PEEK, PTFE, Teflon oder Duroplaste, wie Bakelit. Zusätzlich zur niedrigen Wärmeleitfähigkeit ist eine Wärmebeständigkeit des Materials vorteilhaft.

In einer Ausführungsform des Tanks, welche mit jeder der bereits genannten und noch zu nennenden Ausführungsform kombiniert werden kann, sofern nicht im Widerspruch, grenzt der zweite Bereich an einen dritten Bereich an. Dieser dritte Bereich weist eine dritte Wärmeleitfähigkeit auf, die grösser ist als die Wärmeleitfähigkeit des zweiten Bereichs. Die dritte Wärmeleitfähigkeit kann bspw. gleich gross sein wie die Wärmeleitfähigkeit des ersten Bereichs.

Eine derartige Ausführung kann bspw. von Vorteil sein, wenn für den zweiten Bereich ein besonders hochwertiges, und darum teures, Material vorgesehen ist. So können der erste und dritte Bereich bspw. aus einem günstigeren gut wärmeleitfähigen Material gefertigt sein und lediglich durch einen schmalen zweiten Bereich vollständig voneinander getrennt sein.

Im Folgenden ist beispielhaft eine Auswahl an weiter denkbaren Ausführungsvarianten des Tanks näher beschrieben.

### 27. Ausführungsvariante

Tank (10) zur Verwendung in einer Vorrichtung nach einer der Ausführungsvarianten 1 bis 23, wobei:
- der Tank (10) eine Tankwandung aufweist, welche in mindestens einen ersten Bereich (11) einer ersten Wärmeleitfähigkeit und einen zweiten Bereich (12) einer zweiten Wärmeleitfähigkeit unterteilt ist;
- die erste Wärmeleitfähigkeit höher ist als die zweite Wärmeleitfähigkeit;
- der erste Bereich ((11) mindestens eine nach Innen ragende Rippe (14) umfasst, welche mit dem ersten Bereich (11) thermisch gekoppelt ist; und
- der erste Bereich (11) sich mindestens teilweise verjüngt hin zu einer Auslassöffnung (15).

### 28. Ausführungsvariante

Tank (10) nach Ausführungsvariante 27, wobei der erste Bereich (11) des Tanks (10) einen Konus bildet.

### 29. Ausführungsvariante

Tank (10) nach Ausführungsvariante 27 oder 28, wobei der zweite Bereich (12) ein durchgehender Isolationsbereich ist, welcher an den ersten Bereich (11) angrenzt.

### 30. Ausführungsvariante

Tank (10) nach Ausführungsvariante 29, wobei der zweite Bereich (12) an einen dritten Bereich (13) angrenzt, welcher dritte Bereich (13) eine dritte Wärmeleitfähigkeit umfasst, die grösser ist als die Wärmeleitfähigkeit des zweiten Bereichs (12) und insbesondere gleich gross ist wie die Wärmeleitfähigkeit des ersten Bereichs (11).

Der Tank ist ein erfindungsgemässer Tank, sofern darin eine Schmelzmasse aus der nachfolgend im vorliegenden Dokument beschriebenen erfindungsgemässen Füllstoffmischung bereitgestellt wird.

Weiter beschrieben ist ein Verfahren zum Erzeugen eines Fixierbereichs in einem Leichtbauelement. Dieses Verfahren kann beispielsweise unter Verwendung einer Vorrichtung wie hiervor beschrieben betrieben werden.

Das Verfahren umfasst neben einem portionsweisen Schmelzen einer Füllstoffmischung, um eine Portion Schmelzmasse bereitzustellen, auch ein Bereitstellen eines Leichtbauelements mit mindestens einer Ausnehmung und ein Einspritzen der Portion Schmelzmasse mithilfe einer Druckquelle in die Ausnehmung des Leichtbauelements.

Mithilfe des Verfahrens kann ein Fixierbereich im Bereich der Ausnehmung des Leichtbauelements erzeugt werden. Durch das portionsweise Schmelzen kann ein schneller und unkomplizierter Wechsel an in geschmolzenem Zustand die Schmelzmasse bildender Füllstoffmischung erfolgen. Bevorzugt wird eine erfindungsgemässe Füllstoffmischung, welche nachfolgend noch näher beschrieben wird, verwendet.

In einer Ausführungsform des Verfahrens, welche mit jeder der bereits genannten und noch zu nennenden Ausführungsform kombiniert werden kann, sofern nicht im Widerspruch, umfasst das Einspritzen der Portion Schmelzmasse ein Ansaugen der Portion Schmelzmasse gefolgt von einem Herausdrücken der Portion Schmelzmasse.

Dergestalt kann die Schmelzmasse in besonders bevorzugter Weise portionsweise appliziert werden.

In einer Ausführungsform des Verfahrens, welche mit jeder der bereits genannten und noch zu nennenden Ausführungsform kombiniert werden kann, sofern nicht im Widerspruch, umfasst das Verfahren ein einseitiges Kontaktieren des Leichtbauelements mithilfe einer ersten Platte zum Positionieren des Leichtbauelements und/oder zum Abdichten des Bereichs des Leichtbauelements um die mindestens eine Ausnehmung und/oder zum Kühlen mindestens eines Teils des Leichtbauelements, bevorzugt des Bereichs des Leichtbauelements um die mindestens eine Ausnehmung.

Mit dem Erzeugen eines Kontakts zwischen dem Leichtbauelement und der ersten Platte kann das Leichtbauelement also positioniert, aber auch in seiner Position fixiert werden. Weiter kann das Leichtbauelement abgedichtet werden, bevorzugt um den Bereich der Ausnehmung herum, sodass Schmelzmasse gezielt appliziert werden kann und nicht an unerwünschte Stellen tritt. Auch kann das Leichtbauelement mittels der ersten Platte gekühlt werden (passiv oder auch aktiv), sodass die Schmelzmasse schneller durch Temperaturabnahme erhärten kann und auch schneller der Weiterverarbeitung zur Verfügung steht.

In einer Ausführungsform des Verfahrens, welche mit jeder der bereits genannten und noch zu nennenden Ausführungsform kombiniert werden kann, sofern nicht im Widerspruch, umfasst das Verfahren ein zweiseitiges Kontaktieren des Leichtbauelements. Einerseits mithilfe einer ersten Platte zum Positionieren des Leichtbauelements und/oder zum Abdichten eines Bereichs des Leichtbauelements um die mindestens eine Ausnehmung und/oder zum Kühlen mindestens eines Teils des Leichtbauelements. Andererseits mithilfe einer zweiten Platte zum Positionieren des Leichtbauelements und/oder zum Abdichten eines Bereichs des Leichtbauelements um die mindestens eine Ausnehmung und/oder zum Kühlen mindestens eines Teils des Leichtbauelements. Das Leichtbauelement wird dabei zwischen der ersten Platte und der zweiten Platte gesandwicht.

So kann das Leichtbauelement besonders effizient gekühlt und/oder fixiert bzw. positioniert und/oder abgedichtet werden. Insbesondere ist das Kontaktieren mittels einer zweiten Platte sinnvoll bei Ausnehmungen in den Leichtbauelementen, welche komplett durchgängig sind, da ansonsten Schmelzmasse aus dieser Ausnehmung herauslaufen könnte.

Im Folgenden ist beispielhaft eine Auswahl an weiter denkbaren Ausführungsvarianten des Verfahrens zum Erzeugen eines Fixierbereichs näher beschrieben.

### 31. Ausführungsvariante

Verfahren zum Erzeugen eines Fixierbereichs in einem Leichtbauelement, umfassend:
- Portionsweises Schmelzen einer Füllstoffmischung, um eine Portion Schmelzmasse bereitzustellen;
- Bereitstellen eines Leichtbauelements mit mindestens einer Ausnehmung;
- Einspritzen der Portion Schmelzmasse mithilfe einer Druckquelle in die Ausnehmung des Leichtbauelements.

### 32. Ausführungsvariante

Verfahren nach Ausführungsvariante 31, wobei das Einspritzen der Portion Schmelzmasse ein Ansaugen der Portion Schmelzmasse gefolgt von einem Herausdrücken der Portion Schmelzmasse umfasst.

### 33. Ausführungsvariante

Verfahren nach Ausführungsvariante 31 oder 32, umfassend ein einseitiges Kontaktieren des Leichtbauelements mithilfe einer ersten Platte zum Positionieren des Leichtbauelements und/oder zum Abdichten eines Bereichs des Leichtbauelements um die mindestens eine Ausnehmung und/oder zum Kühlen mindestens eines Teils des Leichtbauelements, bevorzugt des Bereichs des Leichtbauelements um die mindestens eine Ausnehmung.

### 34. Ausführungsvariante

Verfahren nach Ausführungsvariante 31 oder 32, umfassend ein zweiseitiges Kontaktieren des Leichtbauelements mithilfe einer ersten Platte zum Positionieren des Leichtbauelements und/oder zum Abdichten eines Bereichs des Leichtbauelements um die mindestens eine Ausnehmung und/oder zum Kühlen mindestens eines Teils des Leichtbauelements und mithilfe einer zweiten Platte zum Positionieren des Leichtbauelements und/oder zum Abdichten eines Bereichs des Leichtbauelements um die mindestens eine Ausnehmung und/oder zum Kühlen mindestens eines Teils des Leichtbauelements, wobei das Leichtbauelement zwischen der ersten Platte und der zweiten Platte gesandwicht wird.

Das Verfahren zum Erzeugen eines Fixierbereichs in einem Leichtbauelement ist ein erfindungsgemässes Verfahren, wenn, um eine Portion Schmelzmasse bereitzustellen, eine nachfolgend beschriebene erfindungsgemässe Füllstoffmischung portionsweise geschmolzen wird.

Ein Aspekt der Erfindung betrifft eine thermoplastische Füllstoffmischung auf Polymerbasis zum Bereitstellen der Schmelzmasse, welche zum Erzeugen eines Fixierbereichs in einem Leichtbauelement verwendet werden kann. Die Füllstoffmischung kann in der hiervor beschriebenen Vorrichtung geschmolzen und von dieser appliziert werden. Auch kann die Füllstoffmischung im hiervor beschriebenen Verfahren eingesetzt werden.

Basis der Füllstoffmischung ist eine Basismischung aus einem Polymeranteil, einem Wachsanteil und einem Harzanteil.

Der Polymeranteil kann Homopolymere und/oder Copolymere umfassen. Bevorzugt ist gemäss Erfindung die Verwendung von Copolymeren. Copolymere sind Polymere, die sich aus unterschiedlichen Monomeren zusammensetzen, welche regelmässig statistisch oder stochastisch in das Polymermolekül eingebaut sind. Homopolymere hingegen sind Polymere, die sich nur aus gleichen Monomeren zusammensetzen.

Bei dem Polymeranteil, der unter anderem als Bindemittel in der erfindungsgemässen Füllstoffmischung dient, kann es sich um Polykondensate, z.B. Polyester oder Polyaddukte, z. B. Polyurethane oder vorzugsweise um Polymere, welche durch radikalische oder ionische Polymerisation von ethylenisch ungesättigten Monomeren erhältlich sind (kurz: Polymere), handeln.

Besonders geeignet sind die folgenden Copolymere: Vinylacetat-Copolymer (VAc-Copolymer), Ethen-Ethylacrylat-Copolymer (E/EA), Ethen-Vinylacetat-Copolymer (E/VA), Ethylmethacrylat (EMA), Ethylen Butyl Acrylat (EBA), Ethylen Acryl Säure (EAA). Besonders bevorzugt ist die Verwendung von E/VA.

Als Wachsanteil kommen eine oder mehrere der folgenden Wachse zum Einsatz: Polyolefin-Wachs (Polyethylene-Wachs oder Polypropylene-Wachs), Amid-Wachs, Montan-Wachs, Kohlenwasserstoff-Wachs, E/VA-Wachs und Mischungen oder Modifikate dieser Wachse. Der Wachsanteil kann als Granulat, Pulver oder in Flockenform vorliegen. Es können auch flüssige Wachse zum Einsatz kommen. Es eignen sich sowohl homopolymere wie auch Copolymere Wachse. Besonders geeignet sind Wachse, die mit Hilfe von sogenannten Metallocen-Katalysatoren hergestellt werden (im Folgenden Metallocen -Wachse genannt). Bevorzugt ist die Verwendung sogenannter Basiswachse, sprich niedrigviskoser (max. 10 mPa.s bei 130 °C) reiner Kohlenwasserstoffwachse in Kombination mit mindestens einem Metallocen-Wachs, insbesondere einem Polyethylenwachs mit Maleinsäureanhydrid modifiziert, einem Polypropylenwachs mit Maleinsäureanhydrid modifiziert, oder einem Propylen-Ethylen-Copolymerwachs. Besonders bevorzugt ist die Verwendung von Basiswachs in Kombination mit allen drei der explizit genannten Metallocen-Wachse.

Ein Ausführungsbeispiel kann wie folgt beschrieben werden:
Füllstoffmischung zum Herstellen einer Schmelzmasse, umfassend:
- einen Polymeranteil aus der Gruppe Vinylacetat-Copolymer (VAc-Copolymer), Ethen-Ethylacrylat-Copolymer (E/EA), Ethen-Vinylacetat-Copolymer (E/VA), Ethylmethacrylat (EMA), Ethylen Butyl Acrylat (EBA), Ethylen Acryl Säure (EAA);
- einen Wachsanteil aus der Gruppe Polyolefin-Wachs, Amid-Wachs, Montan-Wachs, Kohlenwasserstoff-Wachs, E/VA-Wachs, Metallocen-Wachs;
- einen Harzanteil aus Kohlenwasserstoffharz;
- einen Anteil an Modifizierungsmittel aus der Gruppe Farbpigmente, Fasern, Leichtfüllstoff;
wobei der Wachsanteil sich zusammensetzt aus einer Wachsmischung, welche Kohlenwasserstoff-Wachs und mindestens Polyethylenwachs mit Maleinsäureanhydrid modifiziert, Polypropylenwachs mit Maleinsäureanhydrid modifiziert, oder Propylen-Ethylen-Copolymerwachs umfasst.

In einer Ausführungsform setzt sich der Gesamtanteil (Massenanteil) an Wachs in der Füllstoffmischung zusammen aus ca. 3 Teilen Basiswachs, ca. 4 Teilen Polyethylenwachs mit Maleinsäureanhydrid modifiziert, ca. 2 Teilen Polypropylenwachs mit Maleinsäureanhydrid modifiziert und ca. 3 Teilen Propylen-Ethylen-Copolymerwachs.

Bezogen auf die gesamte Masse der Füllstoffmasse macht der Wachsanteil knapp die Hälfte, sprich ca. 40 - 50 % aus.

Als Harzanteil können Naturharze und modifizierte Naturharze zum Einsatz kommen. Besonders geeignet sind nicht-modifizierte Kohlenwasserstoffharze oder aromatische Kohlenwasserstoffharze (z.B. Harzester). Die Kohlenwasserstoffharze können in flüssiger oder fester Form vorliegen. Besonders geeignet sind hydrierte aliphatische Kohlenwasserstoffharze, wie z.B. Polymethylstyrol-Co-Inden.

Der Basismischung aus Kohlenwasserstoffharz, Wachs und Polymer wird mindestens ein funktioneller Zusatz hinzugefügt. Derartige Zusätze werden hierin als Modifizierungsmittel bezeichnet.

Modifizierungsmittel werden der Basismischung zugesetzt, um bestimmte Eigenschaftsmerkmale an die Füllaufgabe anzupassen, wie z.B.:
- Reduzierung der Wasser- und Feuchtigkeitsbeständigkeit
- Optimierung der Verlaufseigenschaften
- Verbesserung der Füllstoff- und Pigmentbenetzung
- Anpassung der Elastizität,
- Anpassung der Farbe,
- Reduzierung der Sprödigkeit
- Verbesserung der Thermo- und UV-Stabilität,
- Reduzierung des Schwundes,
- Reduzierung der Abrasivität, d.h. der stumpfmachenden Wirkung auf Bearbeitungs- und Verarbeitungswerkzeuge.

Die Füllstoffmischung kann weitere Modifizierungsmittel umfassen, wie z.B. Weichmacher, Verlaufmittel, Verdicker, oder Farbstoffe, um einige Bespiele zu nennen.

Um diesen Zweck zu erfüllen sind Leichtfüllstoffe, die eine Granularität aufweisen und sich gut und homogen in der Basismischung verteilen lassen, als Modifizierungsmittel besonders geeignet. Besonders vorteilhaft sind Mikrokugeln und Mikrokapseln. Es können zum Beispiel Metall- oder Metalloxid-Mikrokugeln (Al2O3, ZrO2, HfO2, TiO2, CeO4, SiO2, Mischoxide etc.) eingesetzt werden. Insbesondere Silikat-Hohlkugeln sind bevorzugt. Durch das Beimengen eines solchen granularen Modifizierungsmittels lassen sich Poren in der Füllstoffmischung definieren und es kann eine maßgeschneiderte spezifische Oberfläche der Füllstoffmischung erzielt werden. Es können auch Mikrokugeln oder Kapseln aus Metalllegierungen oder aus Polymeren hergestellt und als Modifizierungsmittel eingesetzt werden. Auch geeignet sind Oxidkeramik-Mikrokugeln oder Kapseln, harzgebundene Graphitkugeln, Metallotkugeln.

Der Basismischung können Farbstoffe (Farbpigmente) als Modifizierungsmittel zugemengt werden. Es können, je nach Art und Menge der Farbstoffe, verschiedene Farben von weiss bis schwarz eingestellt werden. Damit kann die Füllstoffmischung so ausgelegt werden, dass sie der Farbe des zu füllenden Trägermaterials entspricht.

Um eine bessere Festigkeit zu erreichen, können als Modifizierungsmittel Fasern hinzugefügt werden. Bei der Wahl der Fasern ist darauf zu achten, dass die Abrasivität der Füllstoffmischung die gewünschten Werte nicht übersteigt. Weiche Fasern, insbesondere Naturfasern, eignen sich daher besser als harte Fasern. Je nach Länge der Fasern kann die Vernetzung, respektive der innere Zusammenhalt der Füllstoffmischung verbessert werden. Die Verwendung von Baumwollfasern, insbesondere kurzschnittigen Baumwollfasern, ist bevorzugt.

Die Füllstoffmischung kann in einfacher Weise durch Mischen der Bestandteile hergestellt werden. Dabei ist es vorteilhaft, zunächst eine Basismischung aus dem Polymer, dem Wachs und dem Kohlenwasserstoffharz herzustellen und diese dann mit weiteren Modifizierungsmittel zu mischen.

In den folgenden Tabellen sind Beispiele für die Zusammensetzung der erfindungsgemässen Füllstoffmischung gegeben.

| Bestandteil | Anteil in Gewichts-Prozent | Konkretes Beispiel in Gewichts-Prozent |
|---|---|---|
| hydriertes aliphatisches Kohlenwasserstoffharz | 18 - 25 % | 22 % |
| E/VA Copolymer | 25 - 35 % | 29 % |
| Basiswachs | 10 - 15 % | 12 % |
| Polyethylenwachs MAH-modifiziert | 10 - 20 % | 14 % |
| Propylen-Ethylen-Copolymerwachs | 5 - 15 % | 11 % |
| Polypropylenwachs MAH-modifiziert | 4 - 10 % | 7 % |
| Fasern | 0.1 - 2 % | 1 % |
| Leichtfüllstoff | 1 - 5 % | 3 % |
| Farbpigmente | 0.5 - 10 % | 2 % |

Die Füllstoffmischung gemäss Erfindung ist heissschmelzend. Sie wird verarbeitet, in dem sie aufgeschmolzen wird. Die Füllstoffmischung kann bevorzugt mittels einer erfindungsgemässen Vorrichtung appliziert werden.

Vorzugsweise wird die Füllstoffmischung so ausgelegt, dass sie in einem Temperaturbereich zwischen 120 Grad und 180 Grad verarbeitet werden kann. Besonders bevorzugt sind Füllstoffe, die zwischen 130 Grad und 150 Grad verarbeitet werden können.

Vorzugsweise wird die Füllstoffmischung hergestellt, in dem ein Polymeranteil, ein Wachsanteil und ein Harzanteil aufgeschmolzen werden. Anschliessend werden die Zusätze gleichzeitig oder nacheinander mittels Disolver (Rührwerk) hinzugefügt. Die Füllstoffmischung wird für die Verwendung in der erfindungsgemässen Vorrichtung bevorzugt als Granulat oder in Flockenform gefertigt.

Ein weiterer Aspekt der Erfindung betrifft die Verwendung einer erfindungsgemässen Füllstoffmischung zum Erzeugen von mindestens einem Fixierbereich in einem Leichtbauelement.

Der Fixierbereich ist definiert durch denjenigen Bereich des Leichtbauelements, welcher nach Applikation der Füllstoffmischung (Anm.: in Form von Schmelzmasse) Schmelzmasse umfasst. Bspw. indem Teile des Leichtbauelements mit Schmelzmasse durchdrängt oder Fehlstellen (z.B. in Form der Ausnehmung) von Schmelzmasse mindestens teilweise ausgefüllt wurden.

Ein wiederum weiterer ergänzender Aspekt der Erfindung betrifft die Verwendung einer erfindungsgemässen Füllstoffmischung zum Füllen oder Ausbessern von Holzelementen, insbesondere zum Fixieren von Ästen in Holzelementen.

Beispielsweise für Särge aus Tannenholz ist eine solche Anwendung optimal. Beim Trocknen der Holzelemente aus Tannenholz aber auch aus anderen Hölzern, welche zum Beispiel im Sargbau verwendet werden, lösen sich gerne die darin enthaltenen Äste oder Astansätze. Im Stand der Technik werden diese durch Einspritzen von Heissleim fixiert. Problematisch ist hierbei jedoch, dass der Heissleim gerne in Poren und Risse in Ast und Holz eindringt, dann aber nicht mehr genug Leim zum Fixieren des Astes zur Verfügung steht. Die erfindungsgemässe Füllstoffmischung weist gegenüber Heissleim generell bessere Verbindungseigenschaften auf. Weiter hat eine Applikation mithilfe einer erfindungsgemässen Vorrichtung den Vorteil, dass die Schmelzmasse unter Druck mittels einer Druckquelle appliziert wird und dadurch zuverlässig auch der aufgrund der Volumenänderung durch Trocknung entstandene Raum zwischen Ast und restlichem Holzelement gefüllt wird, sodass eine zuverlässige Fixierung des Astes bzw. Astansatzes erreicht wird.

Ein weiterer Aspekt der Erfindung betrifft ein Leichtbauelement mit mindestens einem Fixierbereich.

In einer Ausführungsform des Leichtbauelements, welche mit jeder der bereits genannten und noch zu nennenden Ausführungsform kombiniert werden kann, sofern nicht im Widerspruch, umfasst der Fixierbereich eine Schmelzmasse hergestellt aus einer erfindungsgemässen Füllstoffmischung.

In einer Ausführungsform des Leichtbauelements, welche mit jeder der bereits genannten und noch zu nennenden Ausführungsform kombiniert werden kann, sofern nicht im Widerspruch, umfasst der Fixierbereich mindestens eine im Leichtbauelement vorhandene Ausnehmung.

Die Ausnehmung kann entweder vollständig oder nur teilweise im Fixierbereich liegen. Ein Fixierbereich kann eine Ausnehmung aber auch mehrere, wie z.B. zwei, drei oder vier, Ausnehmungen umfassen.

In einer Ausführungsform des Leichtbauelements, welche mit jeder der bereits genannten und noch zu nennenden Ausführungsform kombiniert werden kann, sofern nicht im Widerspruch, umfasst der Fixierbereich eine Vertiefung oder Durchgangsöffnung.

Diese ist bspw. geeignet, um eine Schraube einzudrehen und/oder einen Dübel einzudrücken.

In einer Ausführungsform des Leichtbauelements, welche mit jeder der bereits genannten und noch zu nennenden Ausführungsform kombiniert werden kann, sofern nicht im Widerspruch, ist die Schmelzmasse des Fixierbereichs durch eine erfindungsgemässe Vorrichtung appliziert worden.

In einer Ausführungsform des Leichtbauelements, welche mit jeder der bereits genannten und noch zu nennenden Ausführungsform kombiniert werden kann, sofern nicht im Widerspruch, ist der Fixierbereich erzeugt worden durch ein erfindungsgemässes Verfahren.

In einer Ausführungsform des Leichtbauelements, welche mit jeder der bereits genannten und noch zu nennenden Ausführungsform kombiniert werden kann, sofern nicht im Widerspruch, ist der Fixierbereich erzeugt worden durch eine erfindungsgemässe Anwendung.

Ausführungsbeispiele werden nachstehend anhand von Figuren noch näher erläutert. Es zeigen
Fig. 1 eine schematische Darstellung einer Vorrichtung;
Fig. 2 ein schematischer Querschnitt durch eine Ausführungsform einer Vorrichtung, dargestellt in zwei unterschiedlichen Zeichenarten;
Fig. 3 eine vergrösserte Darstellung des den Heizblock umfassenden Bereichs der Vorrichtung aus Fig. 2;
Fig. 4a eine schematische seitliche Darstellung eines Tanks, eines Heizblocks und eines Applikationskopfs einer Ausführungsform einer Vorrichtung;
Fig. 4b eine schematische perspektivische Darstellung eines Tanks, eines Heizblocks und eines Applikationskopfs einer Ausführungsform einer Vorrichtung;
Fig. 4c eine weitere schematische perspektivische Darstellung eines Tanks, eines Heizblocks und eines Applikationskopfs einer Ausführungsform einer Vorrichtung;
Fig. 5a eine schematische perspektivische Ansicht einer Ausführungsform eines Tanks;
Fig. 5b ein Schnitt durch eine Ausführungsform eines Tanks;
Fig. 5c eine schematische perspektivische Ansicht eines ersten Bereichs einer Ausführungsform eines Tanks;
Fig. 5d eine schematische Draufsicht auf eine Ausführungsform eines Tanks;
Fig. 6a eine schematische Darstellung einer Ausführungsform eines Tanks;
Fig. 6b eine schematische Darstellung einer Ausführungsform eines Tanks;
Fig. 7 eine schematische Darstellung eines Applikationskopfs;
Fig. 8 eine schematische Darstellung des Bereichs um die Applikationsöffnung einer Ausführungsform eines Applikationskopfs;
Fig. 9a eine schematische Draufsicht auf einen Applikationsaufsatz;
Fig. 9b eine schematische Seitenansicht des aus Fig. 8a;
Fig. 9c einen schematischen Schnitt durch den aus Fig. 8a;
Fig. 10 eine schematische Darstellung eines Leichtbauelements ohne und mit Fixierbereich;
Fig. 11 eine schematische Darstellung einer Anwendung einer Ausführungsform einer Vorrichtung umfassend eine erste Platte; und
Fig. 12 eine schematische Darstellung einer Anwendung einer Ausführungsform einer Vorrichtung umfassend eine erste Platte und eine zweite Platte.

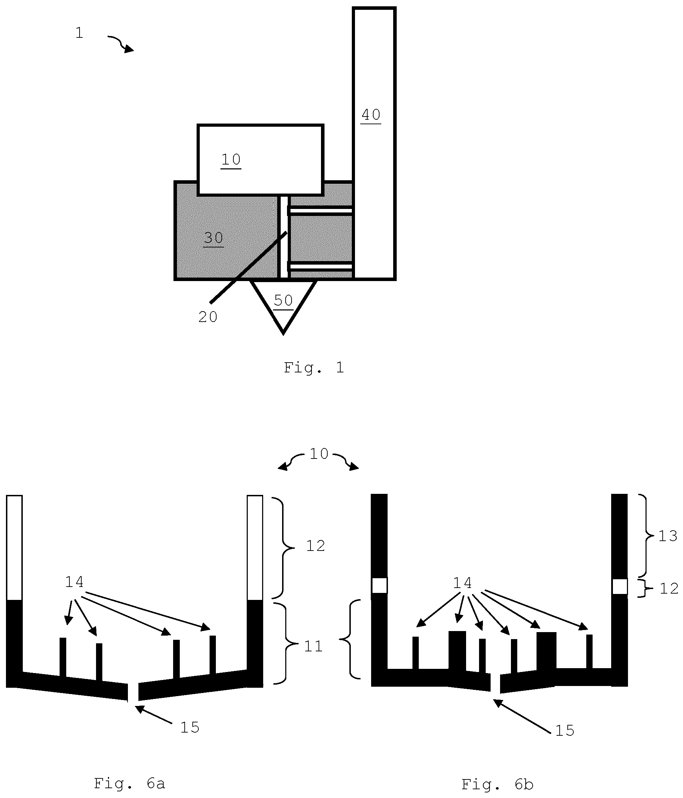

In Figur 1 ist eine schematische Darstellung einer Vorrichtung 1 wiedergegeben. Diese umfasst einen Tank 10, einen Kanal 20, einen Heizblock 30, eine Druckquelle 40 und einen Applikationskopf 50. Der Tank 10 ist über den Kanal 20 fluidverbunden mit dem Applikationskopf 50. Die Druckquelle 40 ist in der Lage mittels einer Wirkverbindung (dargestellt mittels der unteren Querverbindung zwischen Druckquelle 40 und Kanal 20) Material, wie z.B. Schmelzmasse, aus dem Tank anzusagen und so in den Kanal 20 zu befördern. Mittels einer weiteren Wirkverbindung (dargestellt mittels der oberen Querverbindung zwischen Druckquelle 40 und Kanal 20) kann sich im Kanal befindliches Material dann über den Applikationskopf 50 aus dem Kanal 20 gedrückt werden. Der Kanal 20 kommt vollständig im Heizblock 30 zu liegen und ist mit diesem thermisch gekoppelt. Der Tank 10 kommt in einer Ausbuchtung im Heizblock 30 zu liegen und ist ebenfalls mit dem Heizblock thermisch gekoppelt. Druckquelle 40 und Applikationskopf 50 schliessen zwar an den Heizblock 30 an, sind aber im gezeigten Beispiel nicht thermisch mit diesem gekoppelt.

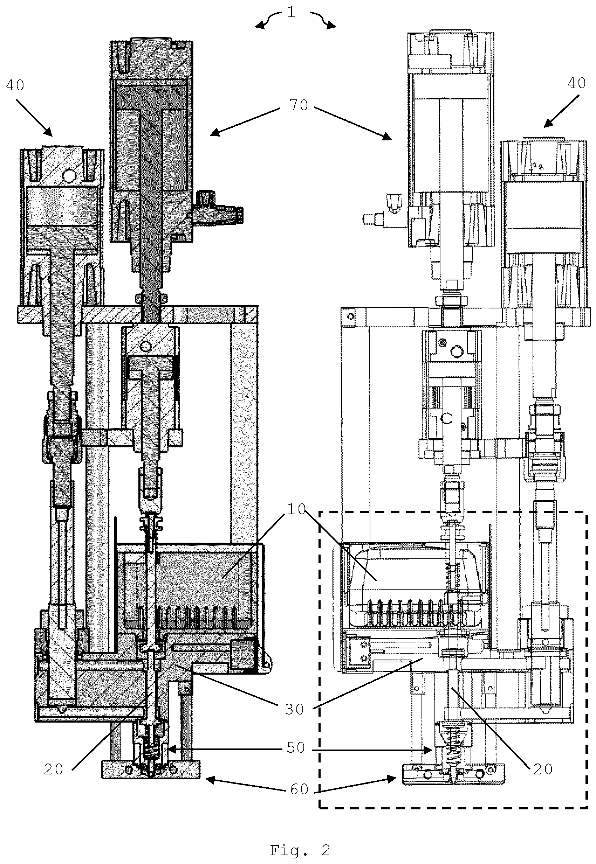

Fig. 2 zeigt einen schematischen Querschnitt durch eine Ausführungsform einer Vorrichtung 1 und zwar dargestellt auf zwei unterschiedlichen Zeichenarten. Zu sehen sind neben dem Tank 10, dem Kanal 20, dem Heizblock 30, der Druckquelle 40, welche hier eine Kolbenpumpe ist, und dem Applikationskopf 50 auch noch eine Hebe- und Senkvorrichtung 70, welche in der Lage ist die zuvor genannten Bestandteile der Vorrichtung 1 anzuheben und abzusenken relativ zu den beiden parallel zum Kolben der Kolbenpumpe 40 verlaufenden Strukturbalken. Die Hebe- und Senkvorrichtung 70 kann beispielsweise druckluftgesteuert werden (siehe Druckluftanschluss an Zylinder). Ein dritter Kolben (Anm.: erster Kolben gehört zu Kolbenpumpe und zweiter Kolben gehört zu Hebe- und Senkvorrichtung 70) dient zum Regulieren des Ventils, welches den Tank 10 öffnet und schliesst. Weiter zu sehen ist eine erste Platte 60, welche den Applikationskopf 50 teilweise umgibt und in nicht thermisch gekoppelter Art und Weise am Heizblock 30 befestigt ist.

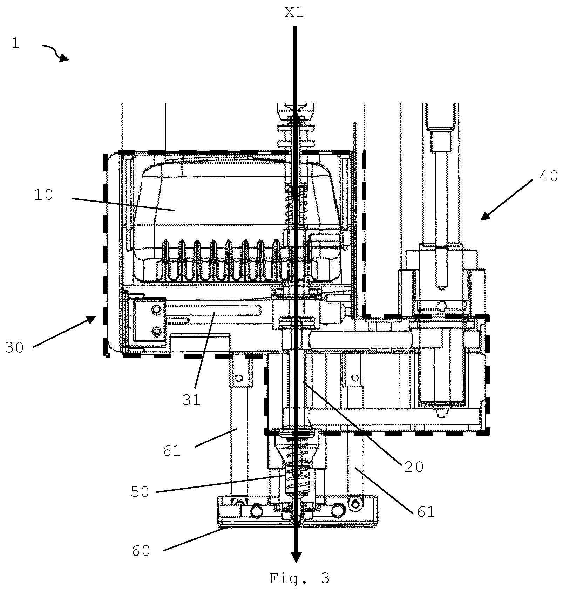

Fig. 3 zeigt eine vergrösserte Darstellung des den Heizblock 30 umfassenden Bereichs der Vorrichtung 1 aus Fig. 2. Mittels gestrichelter Linie ist angedeutet, wo der Heizblock 30 verläuft. Ebenfalls zu sehen ist einer der zwei Heizstäbe 31, welche für das Erhitzen des Heizblocks 30 verantwortlich sind. Ebenfalls zu erkennen sind der Tank 10, der Kanal 20, ein Teil der Kolbenpumpe 40, der Applikationskopf 50 und die erste Platte 60, welche über die Aufhängungen 61, bspw. in Form von Spiralfedern, angeordnet ist.

Ebenfalls dargestellt ist die Achse X1, welche der zentrischen Achse durch den Kanal 20 entspricht. In der hier gezeigten Darstellung ist diese deckungsgleich zur zentrischen Achse X2 des Applikationskopfs, zur zentrischen Achse X3 der Durchgangsöffnung der ersten Platte, und zur zentrischen Achse X4 der Ausnehmung des Leichtbauelements.

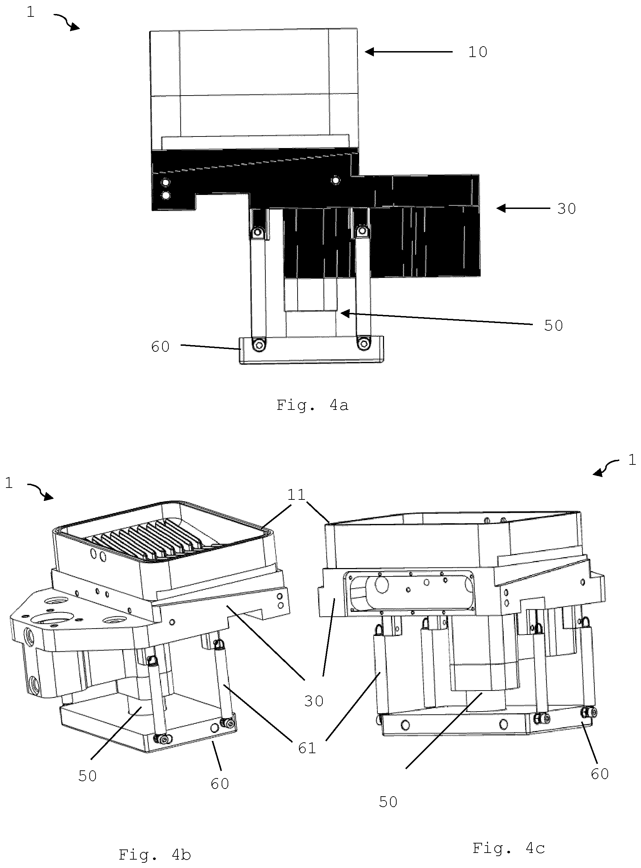

Fig. 4a zeigt eine schematische seitliche Darstellung eines Tanks 10, eines Heizblocks 30 (zur besseren Unterscheidbarkeit in schwarz dargestellt) und eines Applikationskopfs 50 einer Ausführungsform einer Vorrichtung 1. Der Tank 10 schliesst bündig an den Heizblock 30 an, liegt sozusagen auf diesem auf (vergleichbar zu Herd und Kochtopf), und ist mit diesem thermisch gekoppelt. Der Tank 10 in dieser Ausführung also nicht mittels einer Ausnehmung teilweise in den Heizblock 30 eingelassen. Der Applikationskopf 50 ist teilweise vom Heizblock 30 umgeben und ebenfalls mit diesem thermisch gekoppelt (Applikationskopf 50 reicht in Heizblock 30 hinein, was aufgrund der seitlichen Darstellung jedoch nicht gut zu erkennen ist). Die erste Platte 60 ist nicht thermisch gekoppelt am Heizblock 30 angeordnet.

Fig. 4b und 4c zeigen je eine schematische perspektivische Sicht auf einen ersten Bereich 11 (mit den Rippen) eines Tanks, einen Heizblock 30 und einen Applikationskopf 50 einer Ausführungsform einer Vorrichtung 1. Die erste Platte 60 ist mittels vier Aufhängungen 61 am Heizblock über extra dafür vorgesehene Beschläge am Heizblock 30 lösbar angehängt. In Fig. 4b sind die Wirkverbindungen zur Kolbenpumpe gut zu erkennen, wohingegen in Fig. 4c die beiden Ausnehmungen für die Heizstäbe schön zu sehen sind.

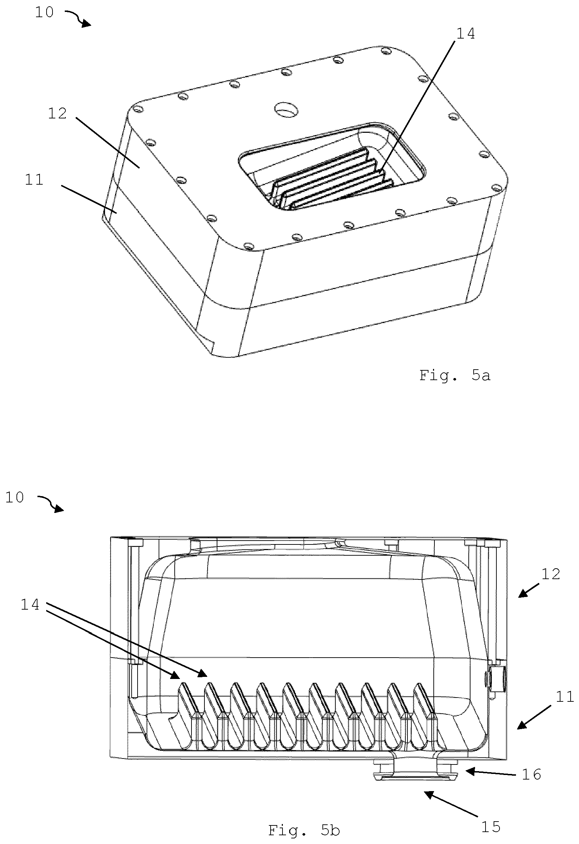

Fig. 5a zeigt eine schematische perspektivische Ansicht einer Ausführungsform eines Tanks 10. Dieser umfasst einen ersten (unteren) Bereich 11 mit Rippen 14 im Inneren und einen zweiten (oberen) Bereich 12 mit einer grossen (hier im Wesentliche rechteckig dargestellten) Öffnung zum Einfüllen der Füllstoffmischung und einer kleinen (hier rund dargestellten) Öffnung für die Ventilsteuerung.

Fig. 5b zeigt einen Schnitt durch eine Ausführungsform eines Tanks 10. Zu sehen ist eine von zwei Rippen-Reihen mit ihren zehn Rippen 14. Weiter zu erkennen ist der erste Bereich 11 und den an diesen angrenzenden zweiten Bereich 12. Weiter gezeigt ist die Auslassöffnung 15 und das diese regulierende Ventil 16.

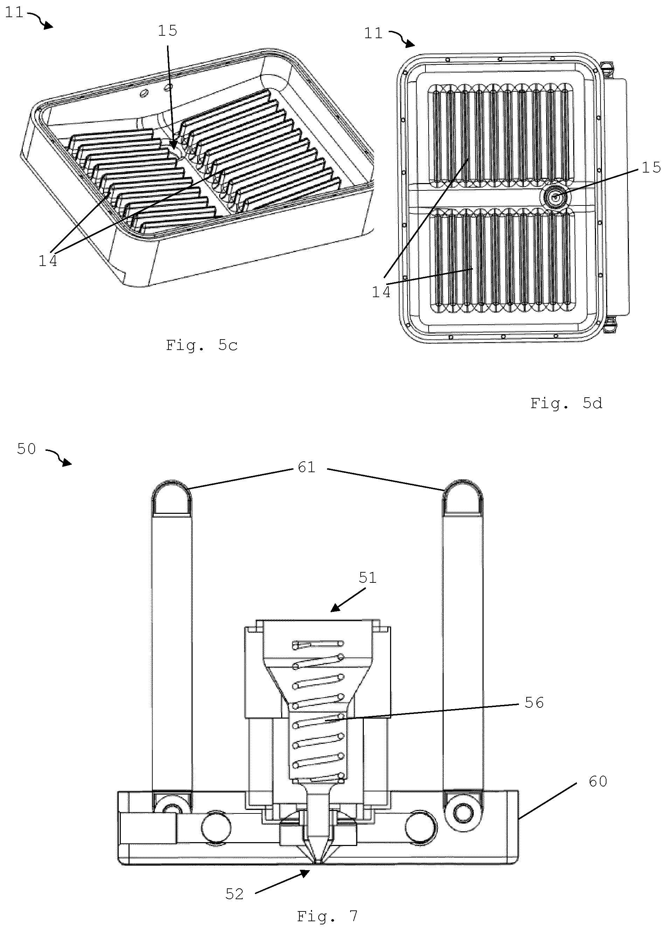

Fig. 5c zeigt eine schematische perspektivische Ansicht eines ersten Bereichs 11 einer Ausführungsform eines Tanks, bspw. vergleichbar zu dem in Fig. 5b gezeigten. Deutlich zu sehen sind die beiden Reihen mit je zehn Rippen 14 und die Verjüngung zur Auslassöffnung 15 hin.

Fig. 5d zeigt eine schematische Draufsicht auf den in Fig. 5c gezeigten ersten Bereich 11 einer Ausführungsform eines Tanks. Die beiden Reihen an Rippen 14 säumen eine Art Fliessstrecke, welcher zur Auslassöffnung 15 führt. Diese befindet sich bevorzugt am tiefsten Punkt des Tanks. Die Fliessstrecke ist bevorzugt tiefer liegend als derjenige Teil des ersten Bereichs 11 an dem die Rippen 14 angeordnet sind. Weiter verläuft die Fliessstrecke bevorzugt abschüssig zur Auslassöffnung 15 hin.

Fig. 6a und Fig. 6b zeigen je eine schematische Darstellung einer Ausführungsform eines Tanks 10.

Der Tank 10 der Fig. 6a weist einen ersten Bereich 11 und einen zweiten Bereich 12, welcher eine geringere Wärmeleitfähigkeit als der erste Bereich 11 besitzt, auf. Der erste Bereich 11 verfügt über insgesamt vier Rippen 14, welche in symmetrisch in Bezug auf die Auslassöffnung 15, zu welcher sich der erste Bereich 11 hin verjüngt, verteilt sind.

Der Tank 10 der Fig. 6b weist einen ersten Bereich 11, einen als Isolationsbereich ausgebildeten zweiten Bereich 12 und einen dritten Bereich 13 auf. Der erste Bereich 11 und dritte Bereich 13 sind beispielsweise aus Aluminium gefertigt und besitzen daher einen identischen und hohen Wärmeleitfähigkeitskoeffizienten. Der Isolationsbereich 12 hingegen trennt die vorgenannten Bereich 11, 13 thermisch voneinander und besteht beispielsweise aus einer temperaturstabilen Gummimischung oder Teflon. Der erste Bereich weist insgesamt sechs Rippen 14 auf, welche unterschiedliche Dimensionen ausweisen und auswechselbar ausgebildet sind. Die Rippen 14 sind zwar in Bezug auf die Auslassöffnung 15 symmetrisch in zwei Reihen angeordnet, die Rippen einer Reihe sind jedoch nicht äquidistant angeordnet.

Fig. 7 zeigt eine vergrösserte schematische Darstellung eines Applikationskopfs 50 zusammen mit einer ersten Platt 60 und deren Aufhängung 61. Oben am Applikationskopf 50 befindet sich dessen Einlassöffnung 51, untern hingegen die Applikationsöffnung 52. Gut zu erkennen ist die stufenförmige Ausgestaltung der ersten Platte 60, wobei der Applikationskopf 50 eine komplementäre stufenförmige Ausgestaltung aufweist, welche jedoch etwas kleiner dimensioniert ist als die stufenförmige Ausbildung der ersten Platte 60, sodass ein gewisses Spiel zwischen erster Platte 60 und Applikationskopf 50 vorhanden ist. Dieses Spiel lässt zu, dass die erste Platte 60 und der Applikationskopf 50 zueinander verschwenkbar sind. Weiter weist der Applikationskopf 50 vier Federn 61 zum flexiblen Lagern des Kanals (hier nicht gezeigt; vgl. Fig. 3) auf.

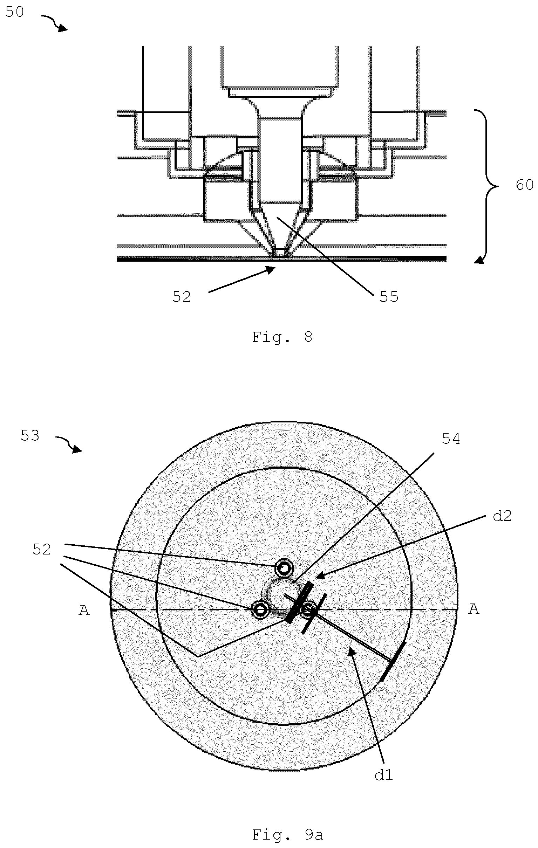

Fig. 8 zeigt eine vergrösserte schematische Darstellung des Bereichs um die Applikationsöffnung 52 einer Ausführungsform eines Applikationskopfs 50. Wie in Fig. 7 bereits beschrieben, sind Platte 60 und Applikationskopf 50 komplementär stufenförmig ausgebildet. Ebenfalls zu erkennen ist ein hemisphärischer Abschnitt, welcher erste Platte 60 und Applikationskopf 50 mit Düse 55 nach Art eines Kugelgelenks zueinander verschwenkbar macht.

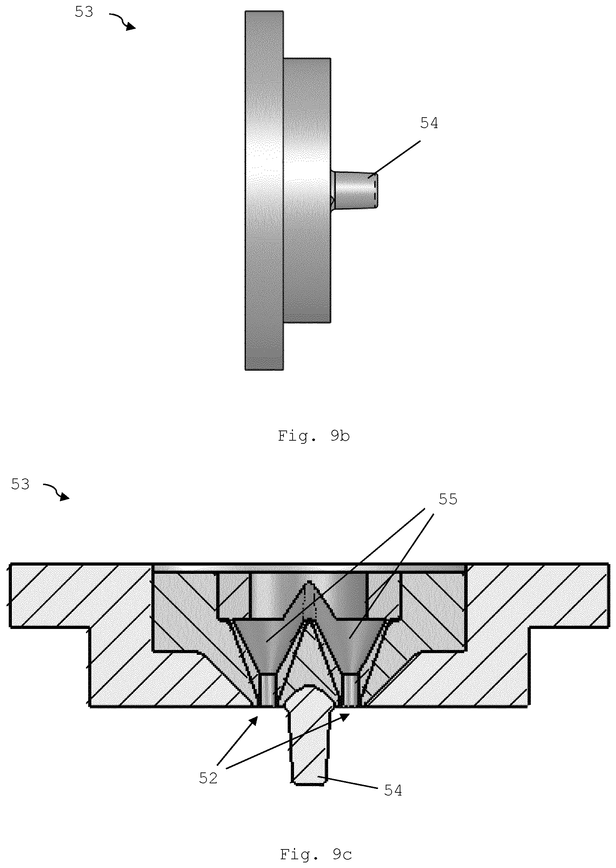

Fig. 9a zeigt eine schematische Draufsicht auf einen Applikationsaufsatz 53, Fig. 9b zeigt eine schematische Seitenansicht dieses Applikationsaufsatzes 53 und Fig. 9c zeigt einen schematischen Schnitt durch besagten Applikationsaufsatz 53 entlang der gezeichneten Schnittlinie AA aus Fig. 9a.

Der Applikationsaufsatz 53 ist stufenförmig ausgebildet (zweistufig) und weist einen zapfenförmigen Vorsprung 54 auf. Dieser ist zentrisch angeordnet und symmetrisch von drei äquidistanten Applikationsöffnungen 52 umgeben. Diese sind benachbart zum Vorsprung 53 bzw. grenzen sogar direkt an diesen an. Benachbart kann so verstanden werden, dass der Abstand zwischen einer Applikationsöffnung und dem Vorsprung kleiner ist als der Abstand zwischen Applikationsöffnung und Aussengrenze des Applikationsaufsatzes, bspw. der Aussengrenze derjenigen Stufe, an der der Vorsprung angeordnet ist. Bevorzugt befindet sich die Applikationsöffnung jedoch gleich neben dem Vorsprung und ist maximal 1 cm, insbesondere maximal 0.5 cm, besonders bevorzugt maximal 0.2 cm von diesem entfernt. Die Applikationsöffnungen 52 werden von drei Düsen 55 gebildet, welche sich zur Applikationsöffnung 52 hin verjüngen, um so die Schmelzmasse mit besonders viel Druck injizieren zu können.

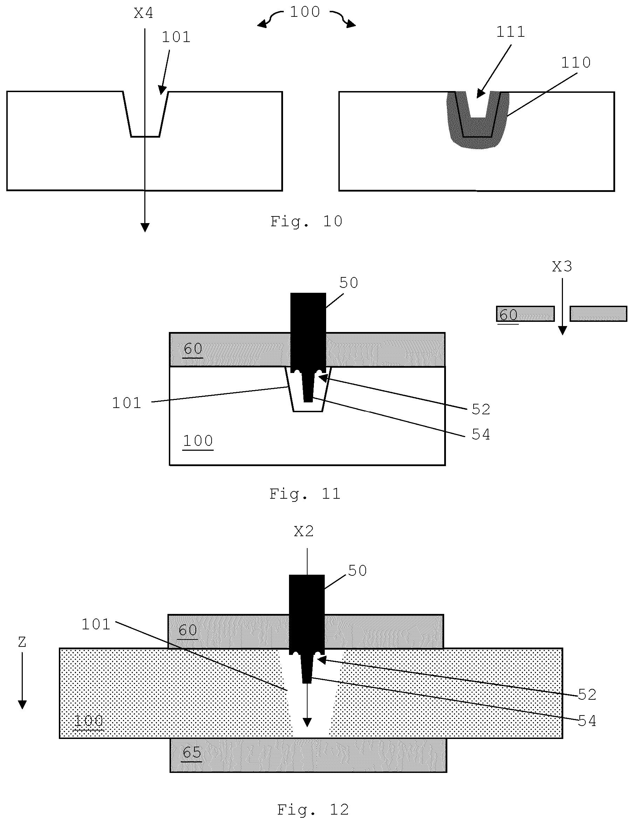

Fig. 10 zeigt eine schematische Darstellung eines Leichtbauelements 100 ohne (linke Seite) und mit Fixierbereich 110 (rechte Seite). Das Leichtbauelement 100 weist eine Ausnehmung 101 auf, in welche Schmelzmasse injiziert wird, um einen Fixierbereich 110 auszubilden. Die Schmelzmasse kommt nicht nur innerhalb der Ausnehmung 101 zu liegen, sondern dringt auch in an diese angrenzenden Bereiche des Leichtbauelements 100 ein, sodass der entstehende Fixierbereich 110 die Kontur der Ausnehmung 100 mindestens teilweise oder, wie hier gezeigt, vollständig umfasst. Durch bspw. einen Platzhalter, wie z.B. einen Zapfen, kann eine Vakanz, bspw. in Form einer Vertiefung 111, im Fixierbereich gebildet werden, welche z.B. das Eindrehen einer Schraube ermöglicht. Alternativ kann eine solche Vakanz auch in einem getrennten Arbeitsschritt durch nachträgliches Entfernen von Schmelzmasse des Fixierbereichs 110 erzeugt werden.

Ebenfalls dargestellt ist die zentrische Achse X4 der Ausnehmung des Leichtbauelements.

Fig. 11 zeigt eine schematische Darstellung einer Anwendung einer Ausführungsform einer Vorrichtung, welche eine erste Platte 60 umfasst. Der Übersichtlichkeit halber sind von der Vorrichtung, neben der ersten Platte 60, nur der Applikationskopf 50 mit einem Vorsprung 54 und zwei zu diesem benachbarten Auslassöffnungen 52 gezeigt. Die erste Platte 60 liegt bündig auf dem Leichtbauelement 100 auf, sodass sie dieses grossflächig kontaktieren und entsprechend kühlen kann. Die erste Platte 60 verhindert aber auch das Austreten von Schmelzmasse zu den Seiten der Ausnehmung 101, indem sie den Rand der Ausnehmung 101 abdichtet. Die Applikationsöffnungen 52 stehen leicht über die erste Platte 60 hervor und ragen, ebenso wie der Vorsprung 54, in die Ausnehmung 101 des Leichtbauteils 100 rein. Die Ausnehmung 101 wird entsprechend nicht bis zum Erreichen eines bündigen Abschlusses mit dem Leichtbauelement mit Schmelzmasse gefüllt, dafür aber mit einer Vertiefung ähnlich zu derjenigen aus Fig. 10 versehen sein.

Ebenfalls dargestellt ist stark verkleinert rechts im Bild die zentrischen Achse X3 der Durchgangsöffnung der ersten Platte 60.

Fig. 12 zeigt eine schematische Darstellung einer Anwendung einer Ausführungsform einer Vorrichtung umfassend eine erste Platte 60 und eine zweite Platte 65. Der Übersichtlichkeit halber sind von der Vorrichtung, neben der ersten Platte 60 und der zweiten Platte 65, nur der Applikationskopf 50 mit einem Vorsprung 54 und zwei zu diesem benachbarten Auslassöffnungen 52 gezeigt. Die erste Platte 60 und der Applikationskopf 50 sind ausgebildet wie bereits im Zusammenhang mit Fig. 11 erläutert. Die Ausnehmung 101 ist hier jedoch durchgängig ausgebildet, sprich geht komplett durch das Leichtbauelement 100 hindurch. Das Leichtbauelement 100 ist zwischen der ersten Platte 60 und der zweiten Platte 65 angeordnet. Die zweite Platte 65 dient nicht dem effizienteren Kühlen, sondern dichtet zusätzlich die Ausnehmung 101 nach unten (in Applikationsrichtung Z gesehen), aber auch seitlich, ab. So verhindert sie ein Herauslaufen oder Tropfen von Schmelzmasse. Die erste Platte 60 und die zweite Platte 65 weisen dieselben Dimensionen auf. Dies ist jedoch nicht notwendig. Sowohl Dicke als auch Fläche der beiden Platten können voneinander unterschiedlich konzipiert sein. Auch können die Platten 60, 65 grösser, kleiner oder gleich gross sein als bzw. wie das Leichtbauelement 100. Ist insbesondere die Fläche (gemeint ist hier nicht nur die absolute Fläche, sondern insbesondere die Länge der Seitenlängen) mindestens einer der Platten 60, 65 gleich gross oder sogar etwas grösser, so kann das Leichtbauelement 100 vollständig beidseitig kontaktiert werden, sodass ein optimaler Wärmeabtransport erreicht wird.

Ebenfalls dargestellt ist die zentrischen Achse X2 des Applikationskopfs.

**Referenzzeichenliste**

| | |
|---|---|
| 1 | Vorrichtung |
| 10 | Tank |
| 11 | Erster Bereich |
| 12 | Zweiter Bereich |
| 13 | Dritter Bereich |
| 14 | Rippe |
| 15 | Auslassöffnung |
| 16 | Ventil |
| 20 | Kanal |
| 30 | Heizblock |
| 31 | Heizstab |
| 40 | Druckquelle |
| 50 | Applikationskopf |
| 51 | Einlassöffnung |
| 52 | Applikationsöffnung |
| 53 | Applikationsaufsatz |
| 54 | Vorsprung |
| 55 | Düse |
| 56 | Feder |
| 60 | Erste Platte |
| 61 | Aufhängung |
| 65 | Zweite Platte |
| 70 | Senkvorrichtung |
| 100 | Leichtbauelement |
| 101 | Ausnehmung |
| 110 | Fixierbereich |
| 111 | Vertiefung |

## Patentansprüche

1. Füllstoffmischung zum Herstellen einer Schmelzmasse, umfassend:
- einen Polymeranteil aus der Gruppe Vinylacetat-Copolymer (VAc-Copolymer), Ethen-Ethylacrylat-Copolymer (E/EA), Ethen-Vinylacetat-Copolymer (E/VA), Ethylmethacrylat (EMA), Ethylen Butyl Acrylat (EBA), Ethylen Acryl Säure (EAA);
- einen Wachsanteil aus der Gruppe Polyolefin-Wachs, Amid-Wachs, Montan-Wachs, Kohlenwasserstoff-Wachs, E/VA-Wachs, Metallocen-Wachs;
- einen Harzanteil aus Kohlenwasserstoffharz;
- einen Anteil an Modifizierungsmittel aus der Gruppe Farbpigmente, Fasern, Leichtfüllstoff;
wobei der Wachsanteil sich zusammensetzt aus einer Wachsmischung, die Kohlenwasserstoff-Wachs, Polyethylenwachs mit Maleinsäureanhydrid modifiziert, Polypropylenwachs mit Maleinsäureanhydrid modifiziert und Propylen-Ethylen-Copolymerwachs umfasst.

2. Füllstoffmischung nach Anspruch 1, wobei der Masseanteil in der Wachsmischung ca. 3 Teilen Basiswachs, ca. 4 Teilen Polyethylenwachs mit Maleinsäureanhydrid modifiziert, ca. 2 Teilen Polypropylenwachs mit Maleinsäureanhydrid modifiziert und ca. 3 Teilen Propylen-Ethylen-Copolymerwachs beträgt.

3. Füllstoffmischung nach einem der Ansprüche 1 bis 2, wobei der gesamte Masseanteil an Wachs in der Füllstoffmischung ca. 41 % bis ca. 50 % beträgt, insbesondere einschliesslich 43 % bis einschliesslich 47 % beträgt.

4. Füllstoffmischung nach einem der Ansprüche 1 bis 3, umfassend als Modifizierungsmittel Baumwollfasern, deren gesamter Masseanteil zwischen einschliesslich 0.5 % und einschliesslich 1.5 % beträgt.

5. Verwendung einer Füllstoffmischung nach einem der Ansprüche 1 bis 4 zum Erzeugen eines Fixierbereichs in einem Leichtbauelement und/oder zum Füllen oder Ausbessern von Holzelementen und/oder zum Fixieren von Ästen in Holzelementen.

6. Verfahren zum Erzeugen eines Fixierbereichs in einem Leichtbauelement, umfassend:
- Portionsweises Schmelzen einer Füllstoffmischung nach einem der Ansprüche 1 bis 4, um eine Portion Schmelzmasse bereitzustellen;
- Bereitstellen eines Leichtbauelements mit mindestens einer Ausnehmung;
- Einspritzen der Portion Schmelzmasse mithilfe einer Druckquelle in die Ausnehmung des Leichtbauelements.

7. Verfahren nach Anspruch 6, wobei das Einspritzen der Portion Schmelzmasse ein Ansaugen der Portion Schmelzmasse gefolgt von einem Herausdrücken der Portion Schmelzmasse umfasst.

8. Verfahren nach Anspruch 6 oder 7, umfassend ein einseitiges Kontaktieren des Leichtbauelements mithilfe einer ersten Platte zum Positionieren des Leichtbauelements und/oder zum Abdichten eines Bereichs des Leichtbauelements um die mindestens eine Ausnehmung und/oder zum Kühlen mindestens eines Teils des Leichtbauelements, bevorzugt des Bereichs des Leichtbauelements um die mindestens eine Ausnehmung.

9. Verfahren nach Anspruch 6 oder 7, umfassend ein zweiseitiges Kontaktieren des Leichtbauelements mithilfe einer ersten Platte zum Positionieren des Leichtbauelements und/oder zum Abdichten eines Bereichs des Leichtbauelements um die mindestens eine Ausnehmung und/oder zum Kühlen mindestens eines Teils des Leichtbauelements und mithilfe einer zweiten Platte zum Positionieren des Leichtbauelements und/oder zum Abdichten eines Bereichs des Leichtbauelements um die mindestens eine Ausnehmung und/oder zum Kühlen mindestens eines Teils des Leichtbauelements,
wobei das Leichtbauelement zwischen der ersten Platte und der zweiten Platte gesandwicht wird.

10. Leichtbauelement (100) mit mindestens einem Fixierbereich (110) umfassend eine Schmelzmasse hergestellt aus einer Füllstoffmischung nach einem der Ansprüche 1 bis 4.

11. Leichtbauelement (100) nach Anspruch 10, wobei der Fixierbereich (110) mindestens eine im Leichtbauelement vorhandene Ausnehmung (101) umfasst.

12. Leichtbauelement (100) nach Anspruch 10 oder 11, wobei der Fixierbereich (110) mindestens eine Vertiefung (111) oder Durchgangsöffnung aufweist.

13. Leichtbauelement (100) nach einem der Ansprüche 10 bis 12, wobei die Schmelzmasse des Fixierbereichs (110) durch eine Vorrichtung nach einem der Ansprüche 1 bis 23 appliziert worden ist.

14. Vorrichtung (1) zum Applizieren von Portionen einer Schmelzmasse, umfassend:
- einen Tank (10) umfassend Schmelzmasse aus einer Füllstoffmischung nach einem der Ansprüche 1 bis 4, welcher Tank über mindestens eine über ein Ventil (16) regulierbare Auslassöffnung (15) verfügt;
- einen Applikationskopf (50) mit einer Einlassöffnung (51) und einer Applikationsöffnung (52);
- einen Kanal (20), in Fluidverbindung mit der Auslassöffnung (15) des Tanks (10) und der Einlassöffnung (51) des Applikationskopfs (50) stehend;
- eine Druckquelle (40) zum Befördern von Schmelzmasse aus dem Tank (10) durch dessen Auslassöffnung (15) über den Kanal (20) zur Applikationsöffnung (52) des Applikationskopfs (50); und
- einen Heizblock (30);
wobei der Tank (10) thermisch gekoppelt angeordnet ist am Heizblock (30) und der Kanal (20) thermisch gekoppelt durch den Heizblock (30) verläuft.

15. Tank (10) zur Verwendung in einer Vorrichtung nach Anspruch 14, wobei:
- der Tank (10) eine Tankwandung aufweist, welche in mindestens einen ersten Bereich (11) einer ersten Wärmeleitfähigkeit und einen zweiten Bereich (12) einer zweiten Wärmeleitfähigkeit unterteilt ist;
- die erste Wärmeleitfähigkeit höher ist als die zweite Wärmeleitfähigkeit;
- der erste Bereich ((11) mindestens eine nach Innen ragende Rippe (14) umfasst, welche mit dem ersten Bereich (11) thermisch gekoppelt ist;
- der erste Bereich (11) sich mindestens teilweise verjüngt hin zu einer Auslassöffnung (15); und
- der Tank (10) Schmelzmasse aus einer Füllstoffmischung nach einem der Ansprüche 1 bis 4 umfasst.
